# FASCICULE DE BREVET EUROPEEN

(11) **EP 0 633 965 B1**
(45) Date de publication et mention de la délivrance du brevet: **11.06.2003**
(21) Numéro de dépôt: 93907701.2
(22) Date de dépôt: 26.03.1993
(51) Int. Cl.: E02B 3/16, E21B 19/24

(54) **DISPOSITIF D'ETANCHEITE POUR SCELLEMENT DE JOINTS D'EXPANSION COUPES DANS DES BARRAGES EN BETON ET PROCEDE D'INSTALLATION DU DISPOSITIF**
Dichtungsvorrichtung für Abdichtung von Dehnungsfugen in Betonstaudämmen und Einrichtungsverfahren derselben
CUT EXPANSION JOINT SEALING DEVICE FOR CONCRETE DAMS AND METHOD FOR FITTING SAME

(30) Priorité: 30.03.1992 CA 2064429
(43) Date de publication de la demande: 18.01.1995
(73) Titulaire: HYDRO-QUEBEC, Montréal Québec H2Z 1A4 (CA)
(72) Inventeur: SZITA, Peter, Sainte-Thérèse, Québec J7E 5A1 (CA); DUBREUIL, Louis, Montréal-Nord, Québec H1H 5B8 (CA)
(74) Mandataire: Casalonga, Axel
(86) Numéro de dépôt international: CA9300126
(87) Numéro de publication internationale: WO93020288

(56) Documents cités:
- AU-B- 456 875
- CH-A- 424 850
- FR-A- 1 429 417
- FR-A- 2 312 605
- FR-E- 22 446
- SE-A- 365 022
- US-A- 1 719 003
- US-A- 2 341 322
- US-A- 2 368 511
- US-A- 3 342 033
- US-A- 4 655 638
- PATENT ABSTRACTS OF JAPAN vol. 10, no. 381 (M-547)(2438) 19 Décembre 1986 & JP,A,61 172 907 (BRIDGESTONE) 4 Aoüt 1986

## Description

La présente invention traite d'ouvrages en béton, tels que des barrages-poids et, plus particulièrement, d'un dispositif d'étanchéité pour scellement de joints d'expansion coupés dans des barrages de ce type.

Le brevet américain no 4,655,638 divulgue une méthode d'imperméabilisation d'une ouverture dans un barrage en béton. Selon cette méthode, un trou est foré sur l'ouverture pour recevoir un membre tubulaire et élastique comprenant une couche interne imperméable et une couche externe enduit d'une résine possédant des propriétés adhésives afin de procurer une bonne adhérence du membre tubulaire aux parois du trou. Le membre tubulaire possède une extrémité supérieure ouverte et une extrémité inférieure fermée. Une fois l'étape d'installation complétée, le membre tubulaire est rempli à l'aide d'un fluide non gazeux et élastique. Un appareil d'inversion opérationnel pour diriger un fluide pressurisé à l'intérieur du membre tubulaire est utilisé pour installer ce dernier dans le trou.

Le brevet américain no 3,342 033 divulgue un dispositif d'étanchéité comprenant un sac flexible utilisé pour former un joint d'étanchéité à la jonction d'un poteau et d'un mur. Le sac est installé dans l'espace défini par un encastrement longitudinal ménagé dans le poteau et une rainure se prolongeant le long d'une extrémité du mur. Une fois en position, le sac est rempli d'un matériau durcissant , tel qu'un ciment.

Les barrages en béton, soit les barrages-poids, les barrages à arcs (en voûte), ou même les barrages à joints peuvent souffrir de problèmes de comportement tels que, pour les barrages sans joints, la fissuration du barrage due au travail, ou le gonflement du barrage dû, par exemple, aux réactions chimiques dans le barrage. Dans le cas des barrages à joints, il arrive que les joints coulent.

Pour réparer les barrages en béton ainsi affectés, on doit créer un joint pour empêcher la transmission des efforts, diminuer les contraintes internes et laisser de l'espace pour le gain de volume ultérieur du béton. Les méthodes actuellement connues sont compliquées et très coûteuses. La section à couper nécessite d'abord la construction d'un batardeau (caisson) du côté mouillé ou en amont du barrage qui a la hauteur du barrage pour éviter le passage ce l'eau dans la coupure durant les travaux. Un tel batardeau est sujet à des pressions très élevées d'où il présente des problèmes de sécurité qui sont partiellement résolus par une installation très coûteuse. Les travaux doivent être effectués par des plongeurs et même par des

scaphandriers selon les profondeurs. De plus, il est nécessaire de continuellement pomper l'eau qui s'infiltre dans le coffre formé entre le batardeau et le barrage. Les réparations de barrages en béton selon cette méthode sont donc très dispendieuses. Une fois les travaux terminés, il est très avantageux de remplacer le système de batardeau par un dispositif d'étanchéité. A ce jour, il n'existe aucun dispositif connu de ce genre efficace à long terme.

Pour offrir des joints d'expansion aux barrages en béton, certains essais ont été effectués avec l'insertion entre les sections en béton du barrage de joints en matériaux plastiques. Cependant, une fois écrasé par le déplacement du barrage, le joint en plastique ne reprend pas sa forme initiale lorsque le barrage revient à sa position originale, ce qui résulte en des joints qui coulent. De plus, il n'y a pas d'adhérence entre le joint en plastique et le béton du barrage. L'utilisation de joints en calfeutrage produirait les mêmes résultats puisqu'ils sécheraient au bout d'une ou deux années.

Pour produire des joints d'expansion dans des barrages en béton, il a également été proposé de construire les barrages en plusieurs sections distinctes et emboîtées et séparées par un espace vide qui sert de jeu lors des déplacements.. des diverses sections du barrage. Chaque section du barrage est coffrée de façon indépendante avec emboîtement espacé pour produire le joint. Pour sceller l'extrémité du joint située du côté de l'eau, on installe des lamelles d'étanchéité qui s'ajustent lorsque les sections du barrage se déplacent les unes par rapport aux autres de sorte à ce que le barrage conserve son caractère étanche. Comme les espaces entre les diverses sections du barrage qui servent de joints se remplissent avec le temps de calcaire et autres, le vide se bloque, éliminant ainsi le jeu entre les sections de barrage et, par conséquent, le joint d'expansion lui-même.

La présente invention a donc pour but de mettre au point un dispositif d'étanchéité pour des ouvrages en béton.

La présente invention a également pour but de mettre au point un dispositif d'étanchéité pour scellement de joints d'expansion coupés dans les barrages en béton qui s'adapte aux mouvements du barrage.

La présente invention a également pour but de mettre au point un dispositif d'étanchéité pour ouvrages en béton qui est de fabrication économique et d'installation facile, sécuritaire et relativement peu coûteuse en remplacement des dispositifs d'étanchéité peu efficaces utilisés à ce jour. L'étanchement des coupures pratiquées dans les barrages pour corriger des anomalies de comportement veut être accompli par une méthode simple et relativement peu coûteuse à l'aide d'un joint d'étanchéité efficace et également relativement peu coûteux.

La présente invention a également pour but de mettre au point une méthode pour créer dans un barrage en béton un joint d'expansion caractérisé par un dispositif d'étanchéité suivant la présente invention. Une méthode est aussi proposée pour remplacer un dispositif d'étanchéité suivant la présente invention par un nouveau joint d'étanchéité. Une méthode est également proposée pour éviter l'installation d'un batardeau en amont du barrage.

La présente invention a également pour but de mettre au point un dispositif de guidage pour des forages avec chevauchement et parallèles entre eux en vue de permettre, entre autres, l'installation dans un barrage en béton d'un joint d'expansion caractérisé par un dispositif d'étanchéité suivant la présente invention.

Telle que revendiquée, l'invention propose un dispositif d'étanchéité pour scellement d'une ouverture pratiquée dans un ouvrage en béton comprenant une cellule faite d'un matériau élastique et incluant au moins une section tubulaire, la cellule étant pourvue à ses extrémités supérieure et inférieure respectivement d'un embout supérieur rigide et d'un embout inférieur rigide, la surface inférieure de l'embout inférieur étant formée pour faciliter l'insertion du dispositif d'étanchéité dans un trou pratiqué sur l'ouverture, des moyens peu extensibles montés entre les embouts supérieur et inférieur pour empêcher l'étirement longitudinal de la cellule , la cellule incluant des moyens de renfort espacés l'un par rapport à l'autre et disposés vis-à-vis l'ouverture pour empêcher la déformation de la cellule dans l'ouverture, un espace périphérique continu étant défini sur la cellule entre les extrémités inférieures des moyens de renfort et l'extrémité supérieure de l'embout inférieur , et des moyens pour permettre le positionne-ment et l'installation du dispositif d'étanchéité .

Selon un mode de réalisation les embouts supérieur et inférieur comportent chacun au moins une section cylindrique, la cellule formant un cylindre recouvrant de façon fixe à ses extrémités supérieure et inférieure les sections cylindriques respectives des embouts supérieur et inférieur

Les sections cylindriques des embouts supérieur et inférieur ménagent chacun des arrêts de retenue sur leur périphérie respective qui engagent respectivement les extrémités supérieure et inférieure de la cellule cylindrique pour assurer leur assemblage, des collets de retenue étant montés autour des extrémités supérieure et inférieure de la cellule pour renforcer ledit assemblage.

L'embout inférieur comprend une section semi-sphérique à l'extrémité inférieure de sa section cylindrique.

Les moyens peu extensibles comprennent au moins un câble monté tendu dans la cellule , les extrémités de chaque câble étant fixées à leur embout respectif à l'aide de moyens d'attache

Lesdits moyens d'attache comprennent des boulons à oeillet .

Selon un mode de réalisation l'embout supérieur comprend un anneau de retenue monté à l'intérieur de sa section cylindrique, l'anneau de retenue pratiquant une ouverture centrale filetée recevant un bouchon , le bouchon incluant une ouverture reliée à une tubulure qui comprend une soupape pour permettre l'entrée d'au moins un fluide dans la cellule et assurer le maintien de la pression désirée de fluide dans la cellule .

La cellule est faite d'un matériau caoutchouteux.

L'embout supérieur comprend des moyens pour la manipulation du dispositif d'étanchéité et pour sa fixation à l'ouvrage.

Les moyens de renfort comprennent deux renforts longitudinaux disposés extérieurement de part et d'autre de la cellule .

Les renforts sont faits d'un matériau rigide et sont collés sur la cellule .

Selon un mode de réalisation lesdits moyens pour permettre le positionnement et l'installation du dispositif d'étanchéité comprennent des anneaux de guidage disposés extérieurement le long de chacun des renforts et s'engageant dans l'ouverture, une poulie montée verticalement au bas de l'embout inférieur, et un câble engageant la poulie et remontant de part et d'autre de la cellule tout en passant au travers des anneaux de guidage respectifs des deux renforts.

Lesdits anneaux de guidage ont chacun une base arquée disposée entre la cellule et un renfort respectif

Selon um mode de réalisation le dispositif d'installation comprend des anneaux de guidage disposés le long de chacun des renforts et s'engageant dans l'ouverture, au moins une tige de guidage passant au travers des anneaux de guidage respectifs d'un des deux renforts et incluant une extrémité inférieure filetée, un manchon de guidage monté au bas du renfort et ménageant une ouverture centrale filetée pour recevoir une tige de guidage respective.

Lesdits anneaux de guidage ont chacun une base arquée disposée entre la cellule et un renfort respectif , une tige de guidage étant prévue pour les anneaux de guidage de chacun des deux renforts

L'invention propose également une méthode d'installation d'un joint d'expansion dans un ouvrage en béton à l'aide d'un dispositif d'étanchéité qui comprend une cellule tubulaire et élastique pourvue à ses extrémités supérieure et inférieure respectivement d'un embout supérieur rigide et d'un embout inférieur rigide la surface inférieure de l'embout inférieur étant formée pour faciliter l'insertion du dispositif d'étanchéité dans l'ouvrage en béton, des moyens peu extensibles montés entre les embouts supérieur et inférieur , la cellule incluant des moyens de renfort espacés l'un par rapport à l'autre, un espace périphérique continu étant défini sur la cellule entre les extrémités inférieures des moyens de renfort et l'extrémité supérieure de l'embout inférieur , la méthode incluant les étapes suivantes:
a) le forage d'un premier trou, dans l'ouvrage destiné à recevoir le dispositif d'étanchéité ;
b) l'installation du dispositif d'étanchéité dans le premier trou, les moyens de renfort étant positionnés dans le sens d'écoulement;
c) le remplissage sous pression requise de la cellule à l'aide d'au moins un fluide approprié ; et
d) l'achèvement du joint d'expansion par la coupure de l'ouvrage dans le sens d'écoulement et vis-à-vis lesdits moyens de renfort , la coupure communiquant avec le premier trou et donc avec le dispositif d'étanchéité et se prolongeant à une profondeur correspondant sensiblement aux extrémités inférieures des moyens de renfort de sorte que la section de la cellule située entre les moyens de renfort et l'embout inférieur épouse sur sa périphérie les murs du premier trou.

Selon une mode de mise en oeuvre avant l'etape b), un deuxième et un troisième trous sont forés avec chevauchement de part et d'autre du premier trou pour faciliter les étapes b) et d).

Avant l'étape d), un quatrième trou (74) est foré, ce quatrième trou étant destiné à recevoir un deuxième dispositif d'étanchéité similaire à celui du premier trou , et dans laquelle, dans l'étape d), la coupure d'achèvement du joint d'expansion rejoint également le quatrième trou.

Un deuxième dispositif d'étanchéité est installé dans le quatrième trou et est ensuite rempli d'un fluide approprié.

Le deuxième dispositif d'étanchéité est rempli sous pression requise à l'aide d'au moins un fluide approprié.

Selon un mode de mise en oeuvre le dispositif d'étanchéité comprend un dispositif d'installation incluant des anneaux de guidage disposés extérieurement le long de chacun des moyens de renfort , une poulie étant montée verticalement au bas de l'embout inférieur , et un câble étant engagé sur la poulie et remontant de part et d'autre de la cellule tout en passant au travers des anneaux de guidage respectifs des moyens de renfort , la méthode comprenant, dans l'étape b), l'introduction des anneaux de guidage dans les deuxième et troisième trous .

Selon un mode de mise en oeuvre le dispositif d'étanchéité comprend un dispositif d'installation incluant des anneaux de guidage disposés extérieurement le long de chacun des moyens de renfort, au moins une tige de guidage passant au travers des anneaux de guidage respectifs d'un des moyens de renfort et incluant une extrémité inférieure filetée, un manchon de guidage monté au bas du moyen de renfort et ménageant une ouverture centrale filetée recevant une tige de guidage respective, la méthode comprenant, dans l'étape b), l'introduction de la tige de guidage et de ses anneaux de guidage dans l'un des deuxième et troisième trous , la fixation du dispositif d'étanchéité à l'ouvrage, puis le dévissage de la tige de guidage du manchon de guidage , et enfin le retrait de la tige de guidage de son trou .

Une tige de guidage (60) est utilisee pour chacun des deuxième et troisième trous , chaque tige de guidage étant associée à un des moyens de renfort .

L'invention propose également une méthode pour le réajustement d'un dispositif d'étanchéité d'un joint d'expansion coupé dans un barrage en béton , le dispositif d'étanchéité comprenant une cellule tubulaire et élastique pourvue à ses extrémités supérieure et inférieure respectivement d'un embout supérieur rigide et d'un embout inférieur rigide , la surface inférieure de l'embout inférieur étant formée pour faciliter l'insertion du dispositif d'étanchéité dans le barrage, des moyens peu extensibles montés entre les embouts supérieur et inférieur, la cellule incluant des moyens de renfort espacés l'un par rapport à l'autre, un espace périphérique continu étant défini sur la cellule entre les extrémités inférieures des moyens de renfort et l'extrémité supérieure de l'embout inférieur , le dispositif d'étanchéité étant installé dans un premier trou ménagé dans le barrage en béton sur le joint d'expansion , ses moyens de renfort étant positionnés dans le sens d'écoulement de l'eau, la cellule étant en tension à l'aide d'au moins un fluide approprié, un deuxième dispositif d'étanchéité , similaire au dispositif d'étanchéité du premier trou , étant installé dans un deuxième trou également pratiqué sur le joint d'expansion , la méthode incluant les étapes suivantes:
a) la mise en tension du deuxième dispositif d'étanchéité sous pression requise à l'aide d'au moins un fluide approprié;
b) la dépressurisation au moins partielle du dispositif d'étanchéité du premier trou de façon à éliminer son adhérence avec les parois du premier trou et à lui permettre de reprendre sa position dans le premier trou ; et
c) la mise en tension du dispositif d'étanchéité du premier trou.

L'installation et la mise en tension du deuxième dispositif d'étanchéité comprennent le forage d'un deuxième trou sur le joint d'expansion destiné à recevoir le deuxième dispositif d'étanchéité et le remplissage du deuxième dispositif d'étanchéité sous pression requise à l'aide du fluide approprié.

L'étape d) consiste à dépressuriser le deuxième dispositif d'étanchéité .

L'invention propose également une méthode de remplacement d'un dispositif d'étanchéité d'un joint d'expansion coupé dans un barrage en béton , le dispositif d'étanchéité comprenant une cellule tubulaire et élastique pourvue à ses extrémités supérieure et inférieure respectivement d'un embout supérieur rigide et d'un embout inférieur rigide , la surface inférieure de l'embout inférieur étant formée pour faciliter l'insertion du dispositif d'étanchéité dans le barrage, des moyens peu extensibles montés entre les embouts supérieur et inférieur , la cellule incluant des moyens de renfort espacés l'un par rapport à l'autre, un espace périphérique continu étant défini sur la cellule entre les extrémités inférieures des moyens de renfort et l'extrémité supérieure de l'embout inférieur , le dispositif d'étanchéité étant installé dans un premier trou ménagé dans le barrage en béton sur le joint d'expansion , ses moyens de renfort étant positionnés dans le sens d'écoulement de l'eau, la cellule étant en tension à l'aide d'au moins un fluide approprié, un deuxième dispositif d'étanchéité , similaire au dispositif d'étanchéité du premier trou , étant installé dans un deuxième trou également pratiqué sur le joint d'expansion , la méthode incluant les étapes suivantes:
a) la mise en tension du deuxième dispositif d'étanchéité sous pression requise à l'aide d'au moins un fluide approprié;
b) la dépressurisation du dispositif d'étanchéité du premier trou;
c) le vidage du fluide contenu dans le dispositif d'étanchéité du premier trou; (70) et son retrait du premier trou ; et
d) l'installation d'un nouveau dispositif d'étanchéité dans le premier trou , son remplissage subséquent à l'aide d'au moins un fluide approprié, et la mise en tension du nouveau dispositif d'étanchéité du premier trou .

L'installation et la mise en tension du deuxième dispositif d'étanchéité comprennent le forage d'un deuxième trou sur le joint d'expansion destiné à recevoir le deuxième dispositif d'étanchéité et le remplissage du deuxième dispositif d'étanchéité sous pression requise à l'aide du fluide approprié.

L'étape e) consiste à dépressuriser le deuxième dispositif d'étanchéité .
La figure 1 est une vue en élévation prise partiellement en section et fragmentée d'un dispositif d'étanchéité suivant la présente invention utilisé dans un joint d'expansion d'un barrage en béton;
La figure 1A est une vue en élévation illustrant une variante de la partie inférieure du dispositif d'étanchéité de la figure 1;
Les figures 2, 3 et 4 sont des vues en section prises respectivement suivant les lignes 2-2, 3-3 et 4-4 de la figure 1;
La figure 5 est un profil en section d'un barrage en béton sur lequel on produit le joint d'expansion utilisant le dispositif d'étanchéité de la figure 1 et illustrant plus particulièrement un système de sciage de la section aval du barrage;
La figure 5A est un profil en section similaire à celui de la figure 5 mais illustrant une variante du système de sciage;
La figure 6 est une vue en plan d'une portion du barrage montrant' la disposition des ouvertures pratiquées dans le barrage pour créer le joint d'expansion, le dispositif d'étanchéité étant absent de la figure 7 pour fins d'illustration;
La figure 7 est un profil en section pris suivant les lignes 7-7 de la figure 6;
La figure 8 est un profil en section illustrant un dispositif de guidage pour forages avec chevauchement et parallèles entre eux suivant la présente invention, et montré en opération dans le barrage;
La figure 9 est vue en plan du dispositif de forage de la figure 8;
La figure 10 est une vue en plan d'une autre construction d'un dispositif de guidage pour forages avec chevauchement et parallèles entre eux suivant la présente invention;
La figure 11 est une vue en section suivant les lignes 11-11 de la figure 10;
La figure 12 est une élévation en section d'un adaptateur pour le dispositif de guidage de la figure 10;
La figure 13 est une vue en plan d'une autre construction d'un dispositif de guidage pour forages avec chevauchement et parallèles entre eux suivant la présente invention;
La figure 14 est une vue en section suivant les lignes 14-14 de la figure 13;
La figure 15 est une vue en plan d'une autre construction d'un dispositif de guidage pour forages avec chevauchement et parallèles entre eux suivant la présente invention.

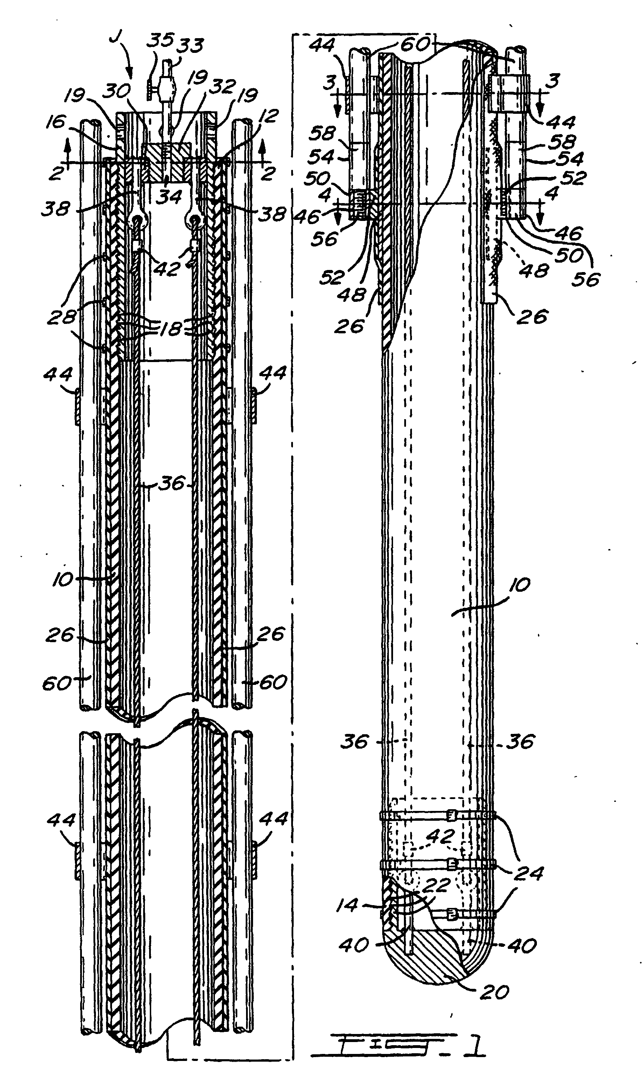

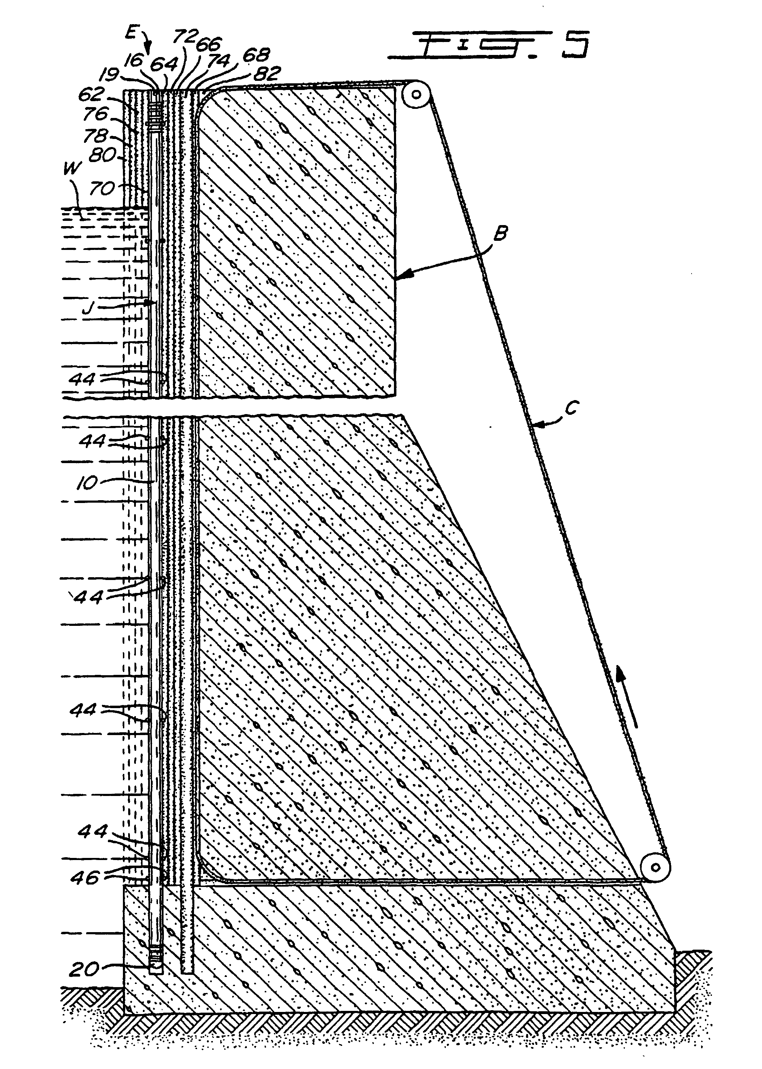

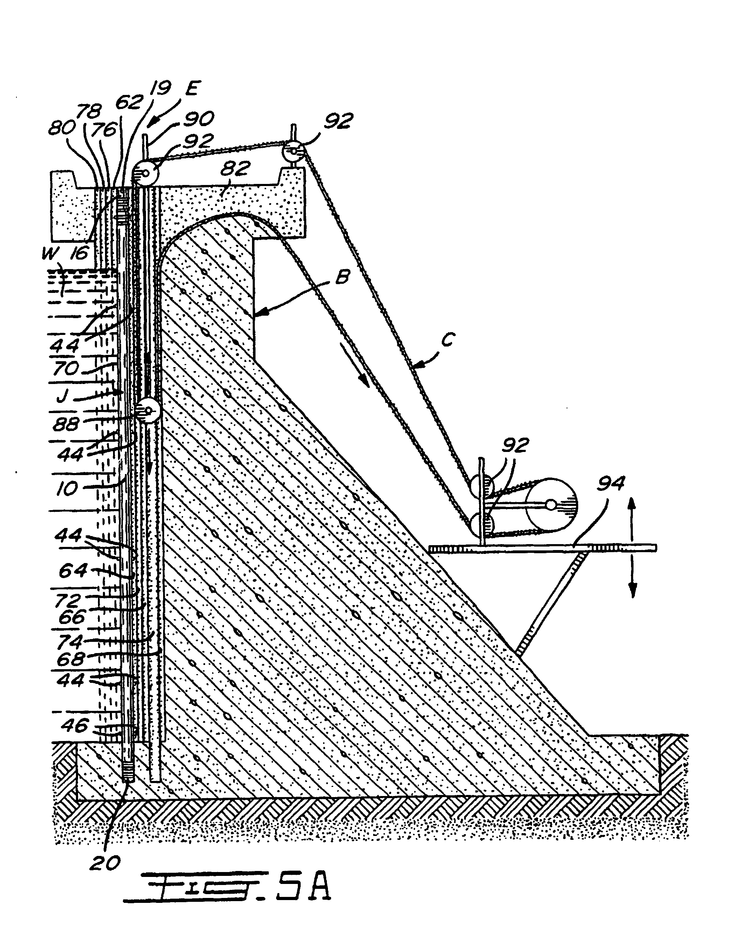

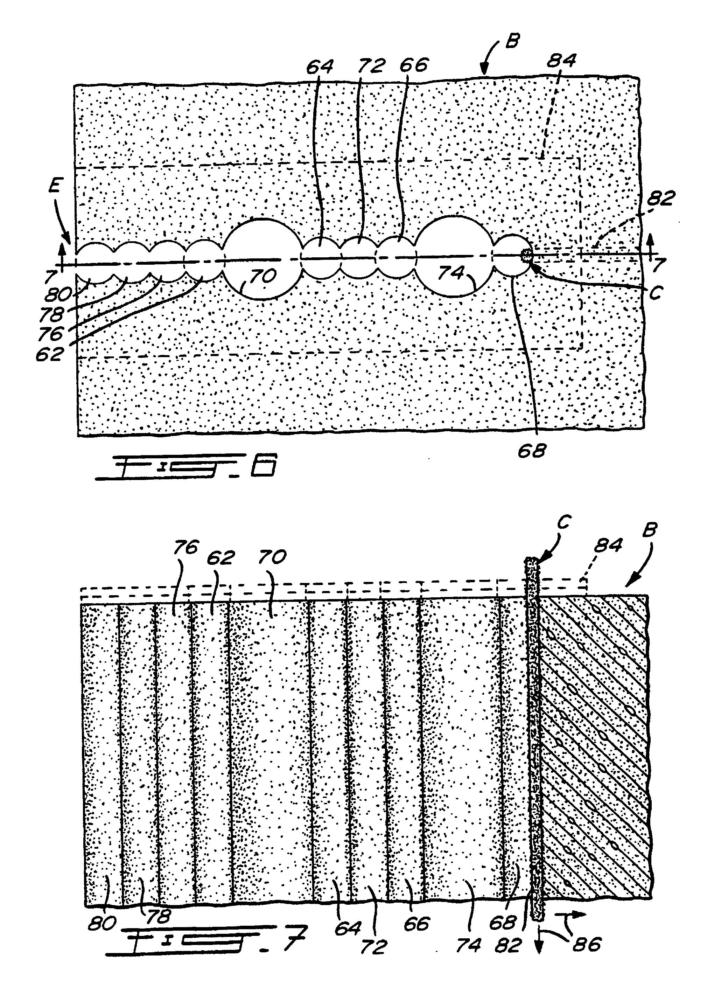

Suivant la présente invention, les figures 1 à 5 illustrent un joint d'étanchéité J pour joints d'expansion E pratiqués dans un ouvrage en béton tel qu'un barrage-poids B. La coupure du joint d'expansion E dans le barrage B et l'installation du joint d'étanchéité J dans le joint d'expansion E seront décrits plus bas en détails avec référence aux figures 5 à 7.

Nous décrivons maintenant la structure du joint d'étanchéité J. Le joint d'étanchéité J comprend une cellule cylindrique tubulaire 10 faite d'un matériau caoutchouteux. La cellule 10 est ouverte à ses extrémités supérieure et inférieure 12 et 14, respectivement. La cellule 10 peut être faite à partir d'un panneau rectangulaire de hauteur égale à la hauteur de la cellule désirée et de largeur supérieure à la circonférence de cette cellule. Ainsi, la cellule 10 est construite en repliant le panneau pour en faire un tube tout en chevauchant les rebords longitudinaux du panneau. Les portions du panneau qui se chevauchent sont fixées l'une à l'autre à l'aide d'un adhésif. Un embout cylindrique rigide 16 est inséré de façon fixe dans l'extrémité supérieure 12 de la cellule 10 à l'aide d'arrêts de retenue 18 ménagés sur la périphérie de l'embout supérieur 16 et qui pénètrent partiellement dans la cellule 10 pour s'y agripper. L'embout supérieur 16 ménage près de son rebord libre supérieur quatre trous 19 disposés de façon équidistante le long de la périphérie de l'embout supérieur 16. Deux des trous 19 servent à la manipulation du joint d'étanchéité J, par exemple à l'aide d'une grue; ou d'un échafaudage muni d'un dévidoir, pour son insertion dans le joint d'expansion E, tandis que les deux autres trous 19 servent à fixer le joint d'étanchéité J au haut du barrage B de sorte qu'il soit suspendu dans le trou qui le reçoit.

Un embout inférieur rigide 20 ayant une section supérieure cylindrique et une section inférieure de forme semi-sphérique est inséré dans l'extrémité inférieure 14 de la cellule 10 et y est fixé de façon similaire à l'embout supérieur 16, c'est-à-dire à l'aide d'arrêts de retenue 22 pratiqués sur la surface périphérique extérieure de l'embout inférieur 20 et qui s'agrippent à la surface intérieure de l'extrémité inférieure 14 de la cellule 10. Des collets de retenue 24 sont positionnés et mis en tension autour de l'extrémité inférieure 14 de la cellule 10 vis-à-vis la section cylindrique de l'embout inférieur 20 de façon à produire une connexion plus solide entre la cellule 10 et l'embout inférieur 20.

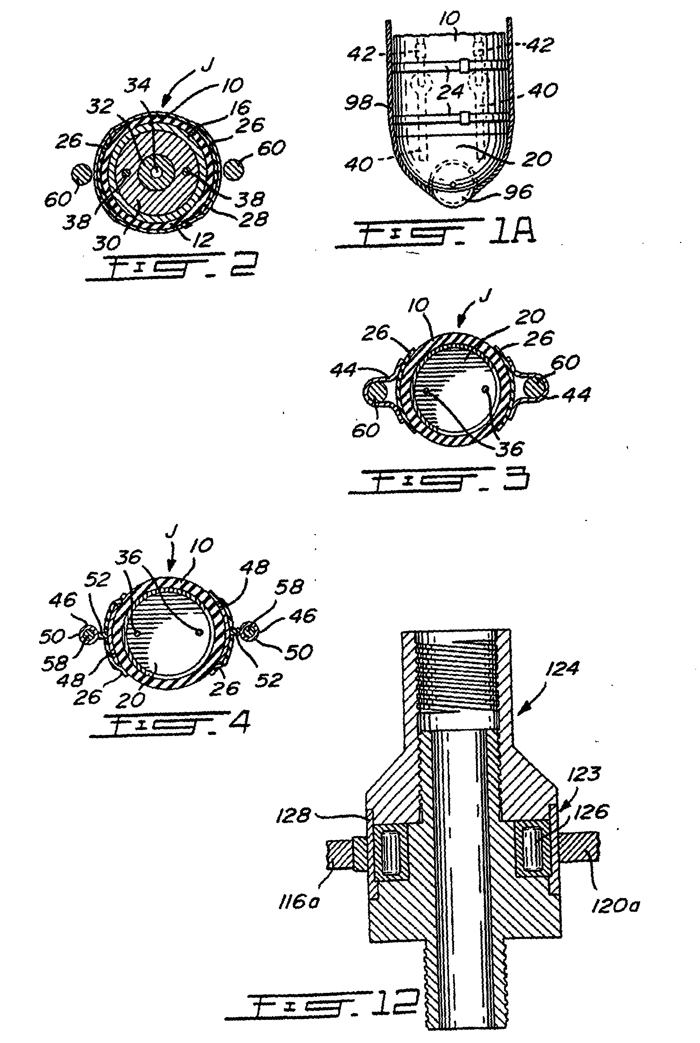

Deux renforts 26 de forme allongée et de section en forme de segment de cercle sont montés de façon opposée et longitudinale de part et d'autre sur l'extérieur de la cellule 10 (voir figure 2). Ces renforts 26 peuvent être faits d'un matériau dur (tel que du "tire-cord") de sorte à empêcher une déflexion radiale de la cellule 10 au niveau des installations de ces renforts 26, même sous l'effet de la pression interne qui s'exerce sur la cellule 10 lorsqu'elle est remplie de liquide et mise sous tension, tel qu'il le sera décrit plus en détails lors de la description de l'installation du joint d'étanchéité J dans le texte qui suit. Les renforts 26 peuvent, par exemple, être montés à la cellule 10 à l'aide de colle. On entrevoit également la possibilité d'installer les renforts 26 entre les couches de la cellule 10.

Des collets de retenue 28 sont montés à tension autour de la cellule 10 et des renforts 26 vis-à-vis l'embout supérieur 16. Ces collets de retenue 28 ont la même fonction que les collets de retenue 24 qui agissent sur l'embout inférieur 20.

Un anneau de retenue 30 est monté de façon fixe à la surface interne de l'embout supérieur 16 à l'aide de soudure. Cet anneau de retenue 30 pratique en son centre une ouverture filetée qui reçoit un bouchon 32 à surface extérieure filetée. Le bouchon 32 comprend une ouverture centrale circulaire 34 communiquant avec une tubulure 33 sur laquelle est installée une soupape 35 pour permettre le remplissage du joint d'étanchéité J de liquide et peut-être de gaz et pour assurer la conservation de la pression exercée par ces derniers dans le joint J.

Au moins deux câbles 36 sont montés à l'intérieur de la cellule 10 de façon à connecter les embouts supérieur et inférieur 16 et 20, respectivement. Les câbles 36 empêchent la déformation longitudinale ou l'allongement de la cellule 10 qui pourraient découler de sa flexibilité, de son élasticité et du poids qu'elle supporte. Les extrémités supérieures des câbles 36 sont montées à l'anneau de retenue 30 à l'aide de boulons à oeillet 38 soudés à l'anneau de retenue 30, alors que les extrémités inférieures des câbles 36 sont retenues à la section conique pleine de l'embout inférieure 20 également par des boulons à oeillet 40 joints à cette section conique par soudure. Les extrémités des câbles 36 s'engagent dans les trous des boulons à oeillet 38 et 40 et sont ensuite repliées sur elles-mêmes et maintenues en position par des collets de serrage 42. Il serait possible d'éliminer les câbles 36 et, dans ce cas, la résistance à l'étirement de la cellule 10 serait entreprise par les renforts 26.

Les embouts supérieur et inférieur 16 et 20 sont, dans la construction illustrée, fait d'un acier inoxydable. L'anneau de retenue 30 est soudé à l'embout supérieur 16 et les boulons à oeillet 38 sont soudés à l'anneau de retenue 30. Les boulons à oeillet 40 sont soudés à l'embout inférieur 20. On prévoit également des embouts 16 et 20 en matériau plastique, tel que le nylon, et un montage à l'aide d'adhésif ou autre des pièces qui doivent s'y fixer, c'est-à-dire l'anneau de retenue 30 et les boulons à oeillet 38 et 40. Le vissage des boulons à oeillet 38 et 40 est également prévu à la place ou en plus de l'adhésif. L'avantage du plastique par rapport à l'acier inoxydable réside en ce qu'on peut forer au travers des embouts en plastique si le joint d'étanchéité J se coince dans le trou 70 pour une raison ou une autre.

Des anneaux de guidage 44 sont montés de façon espacée le long de chacun des renforts 26 (voir également la figure 3). Près de l'extrémité inférieure de chacun des renforts 26 est monté un manchon de guidage 46 qui inclut une base arquée 48 (voir la figure 4) disposée entre le renfort 26 et la cellule 10 et qui comprend également une section tubulaire 50 de surface interne filetée jointe à la base 48 par un cou 52 en forme de petite plaque disposée longitudinalement le long de la cellule 10 et se projetant de façon radiale de cette dernière. Ce cou 52 est préférablement vissé à la base arquée 48 pour permettre aux manchons de guidage 46 et, plus particulièrement, à leurs sections tubulaires 50 et à leurs cous 52 d'être enlevés du joint d'étanchéité J. Un adaptateur de guidage 54 est vissé à son extrémité inférieure 56 à l'aide d'un filet à gauche dans le tube fileté 50 de chacun de deux manchons de guidage 46. L'extrémité supérieure de chaque adaptateur de guidage 54 comprend une section cylindrique tubulaire 58 ménageant un filet dans son ouverture centrale.

Comme il le sera décrit de façon détaillée plus loin, une tige de guidage 60 de forme cylindrique est glissée vis-à-vis chacun des renforts 26 dans les anneaux de guidage 44 respectifs pour l'installation du joint d'étanchéité J dans le joint d'expansion E. Les extrémités inférieures des tiges de guidage 60 ménagent chacune une section filetée qui se visse dans la section cylindrique tubulaire 58 d'un adaptateur de guidage 54 respectif.

Les figures 5 à 7 illustrent une méthode pour produire un joint d'expansion E dans un barrage-poids B, ce joint d'expansion E étant constitué principalement par une faille verticale ou coupure créée suivant plusieurs étapes en travers du barrage B et pratiquement sur toute sa hauteur et par le positionnement du joint d'étanchéité J dans la coupure pratiquée dans le barrage B.

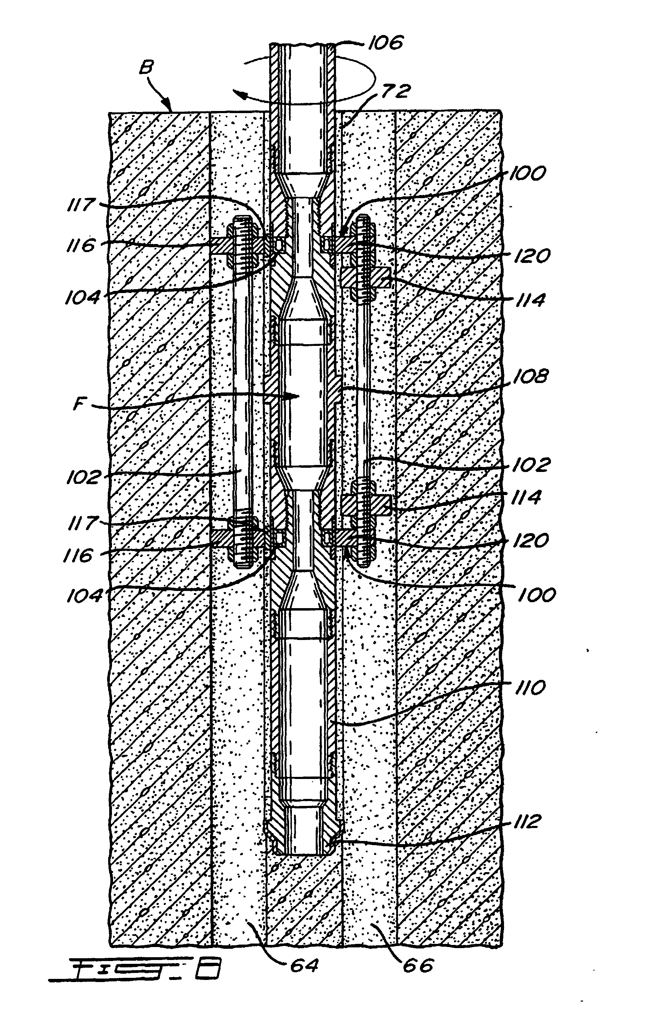

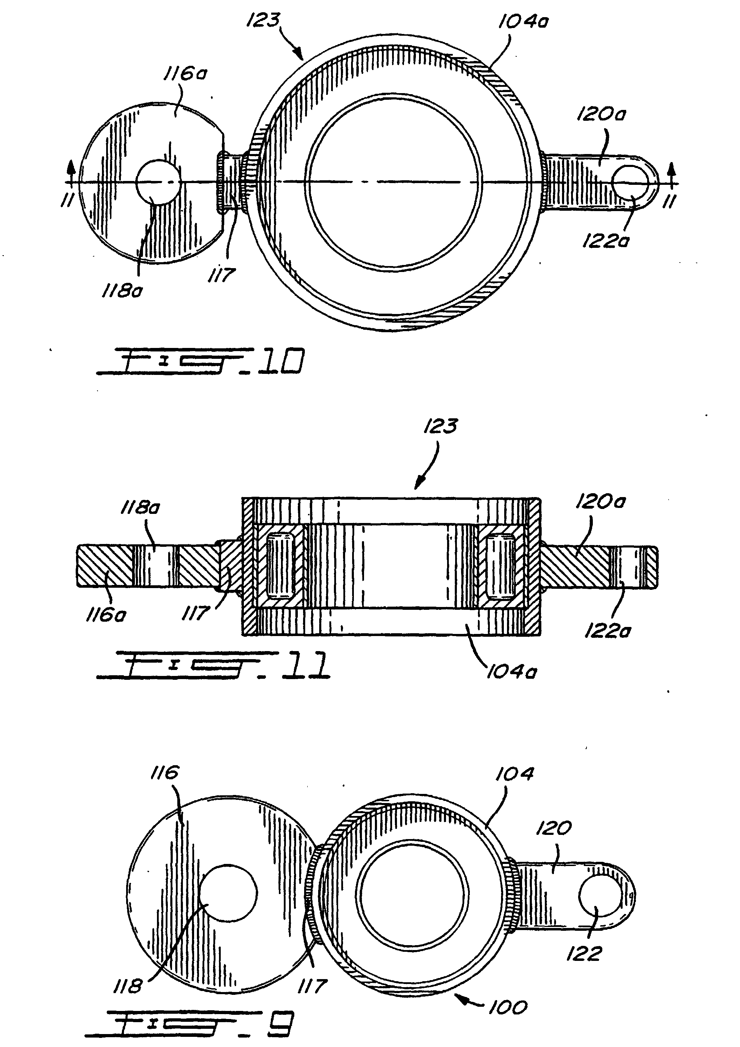

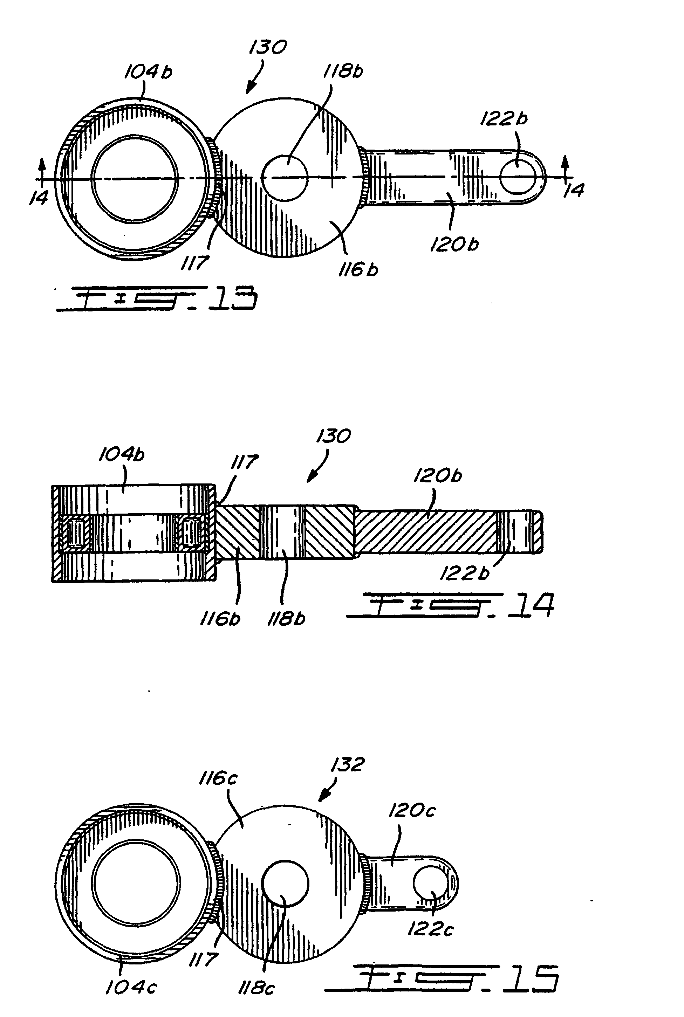

Pour produire la coupure dans le barrage B on utilise, selon la méthode illustrée, trois types de creusage. Le premier consiste à forer des trous dans le barrage qui sont complètement verticaux à l'aide d'un appareil de forage à verticalité contrôlée développée par la Demanderesse et qui fait partie des connaissances publiques. Le deuxième type de creusage correspond à un forage dont la verticalité est assurée par un dispositif de guidage relié à deux trous forés de façon verticale qui sont peut-être le résultat de forages à verticalité contrôlée. Ce dispositif de guidage représente un autre aspect de la présente invention qui sera décrit en détails plus loin dans le texte avec référence aux figures 8 à 15. Le troisième type de creusage utilise un câble diamanté C qui représente une modification de câbles similaires utilisés dans les carrières pour diverses activités de sciage. Un tel câble diamanté C crée une coupure dans le barrage B de largeur constante (10 à 15 millimètres de largeur), tandis que les forages faits suivant les deux premiers types de creusage brièvement décrits ci-dessus produisent des trous circulaires qui se chevauchent de façon à former dans le barrage B une coupure continue mais dont la largeur varie.

Avec référence à la figure 5, des trous circulaires et verticaux 62, 64, 66, 68, 70, 72, 74, 76, 78 et 80 ont été forés dans le barrage B par des forages effectués soit à l'aide d'un dispositif de forage à verticalité contrôlée, soit à l'aide d'un dispositif de forage plus conventionnel utilisant le dispositif de guidage brièvement mentionné ci-dessus qui a été engagé dans un trou vertical précédent. Le joint d'étanchéité J doit être installé dans le trou 70 de la figure 5 ou de la figure 5A avant que la coupure formée à partir du trou 70 d'emplacement du joint d'étanchéité J ne rejoigne l'eau W située en amont du barrage B (i.e. derrière le barrage). La coupure du joint d'expansion E se termine par le sciage d'une grande section du barrage B à l'aide du câble diamanté C (voir la coupure à largeur constante 82 entamée sur les figures 5 et 5A et montrée en pointillés sur la figure 6).

Se référant maintenant aux figures 6 et 7, un gabarit 84 est utilisé pour assurer entre autre l'orientation de la coupure du barrage B pour produire le joint d'expansion E. En effet, le gabarit 84 permet l'alignement des trous formant la coupure du joint d'expansion E suivant une orientation pré-établie.

Ainsi, suivant une méthode selon la présente invention, les quatre premiers trous sont forés, c'est-à-dire les trous 62, 64, 66 et 68. Ces trous qui sont creusés à l'aide du dispositif de forage à verticalité contrôlée sont pratiqués dans le barrage B afin de chevaucher de part et d'autre les deux trous 70 et 74 prévus pour recevoir les joints d'étanchéité J. Les trous 62, 64, 66 et 68 étant parfaitement verticaux, on utilise maintenant un dispositif de forage monté au dispositif de guidage pour forages à chevauchement et parallèles entre eux pour creuser les trous circulaires 70, 72, 74 et 76.

Ensuite, le joint d'étanchéité J est descendu dans le trou 70 à l'aide d'une grue ou autre qui s'accroche à deux des trous 19 de l'embout supérieur 16 du joint d'étanchéité J. La forme semi-sphérique de l'embout inférieur 20 assiste à l'insertion et à la descente du joint d'étanchéité J dans le trou 70 dont la progression dans le trou 70 se fait sous le poids même du joint d'étanchéité J. Les tiges de guidage 60 sont insérées dans les trous 62 et 64 qui chevauchent de part et d'autre le trou 70 recevant le joint d'étanchéité J pour guider le joint d'étanchéité dans son trou 70. Ainsi, les renforts 26 sont positionnés vis-à-vis la coupure et formeront ainsi un obstacle à la déformation de la cellule 10 en direction et partiellement à l'intérieur des trous 62 et 64 qui pourrait découler de l'effet de la pression radiale vers l'extérieur exercée dans la cellule 10. Les rebords verticaux de chaque renfort 26 sont accotés contre la paroi interne du trou 70 de part et d'autre de l'ouverture communiquant avec les trous 62 et 64 due au chevauchement des trous. On note que le joint d'étanchéité J pourrait être installé dans le trou 70 à l'aide d'une seule des tiges de guidage 60. On note également que le joint J peut être installé de sorte que l'embout inférieur 20 s'accote au fond du trou 70, tel qu'illustré à la figure 5A. D'autre part, l'embout inférieur 20 peut être positionné de façon à être suspendu dans le trou 70 (voir figure 5) en vue de laisser un jeu dans le trou 70. En effet, si l'embout inférieur 20 se brise, on peut tout simplement le pousser au fond du trou 70 et ensuite installer un nouveau joint d'étanchéité J en conservant l'embout inférieur original et défectueux au fond du trou 70.

Le joint d'étanchéité J est ensuite fixé au barrage B en connectant les deux autres trous 19 de l'embout supérieur 16 au béton de l'extrémité supérieure du trou 70. Le joint d'étanchéité J est ensuite rempli d'un liquide non gélif (du moins dans les régions sujettes à des températures basses); tel qu'un anti-gel qui n'attaque pas le caoutchouc du joint d'étanchéité J ("Prestone™"). Un gaz sous pression peut ensuite être introduit dans la cellule 10 pour obtenir la pression désirée dans cette dernière. Le gaz peut être de l'air ou un autre gaz, et une pression de 15 à 25 livres (1 livre = 1 psi = 6.9 x 10³ Pa) dans la cellule 10 assurera qu'il n'y aura pas de fuites d'eau entre le joint d'étanchéité J et les parois du trou 70. Le bouchon 32 est fermé de sorte à sceller la cellule 10 pour la maintenir sous pression. Les tiges de guidage 60 sont ensuite dévissées des adaptateurs de guidage 54 de la tige et retirées par glissement des anneaux de guidage 44 et du trou 74. On note que l'insertion du joint d'étanchéité J dans le trou 70 sous l'effet de son propre poids est facilitée si la cellule 10 est graduellement remplie de son liquide. De plus, les murs du trou 70 peuvent être lubrifiés par exemple au moyen de bentonite ou d'un fluide à base de polymère.

Une fois que le joint d'étanchéité J a été correctement installé, on peut forer le barrage B vers l'eau en creusant, en ordre, les trous 78 et 80 en utilisant le dispositif de forage dont on s'est servi pour produire les trous 70, 72, 74 et 76. La verticalité et le parallélisme des trous sont assurés par le dispositif de guidage pour forages à chevauchement et parallèles entre eux mentionné précédemment et décrit en détails ci-après. Finalement, le câble diamanté C est utilisé pour creuser la coupure 82 et ainsi joindre le trou 68 au devant du barrage B (à son côté opposé à l'eau) de façon à compléter la coupure du joint d'expansion E. Les flèches 86 de la figure 7 montrent les directions de progression du câble diamanté C lors de la coupe de la coupure 82. Préalablement, un trou horizontal peut être foré pour rejoindre le devant du barrage B au trou 68 et ainsi permettre au câble diamanté C de faire le tour du barrage B comme on le voit à la figure 5. D'autres arrangements peuvent être utilisés pour le parcours du câble diamanté, par exemple, dans les cas où le trou horizontal devrait rejoindre une coupure de faible largeur. Dans ce cas et dans d'autres, on peut utiliser une autre méthode d'utilisation du câble diamanté C, telle qu'illustrée à la figure 5A.

Dans la figure 5A, le câble diamanté C est guidé par une poulie mobile qui est montée, par exemple, à un vérin hydraulique 90 et par des poulies-guides 92. La poulie mobile 88 est insérée à une certaine profondeur (10 pieds, par exemple) dans les trous adjacents à la coupure que l'on veut effectuer à l'aide du câble diamanté C. L'une des deux sections du câble diamanté qui ressortent de ces trous est guidée par la poulie 92 située au-dessus du barrage B, alors que l'autre section de câble s'appuie sur le dessus du barrage de sorte à y exercer une pression vers le bas et à ainsi couper le barrage graduellement vers le bas. Lorsque la coupure 82 est presque rendue au niveau de la poulie mobile 88, le câble diamanté C n'exerce plus de force sur le béton et ne peut, par conséquent, continuer à couper le barrage B. On arrête le sciage et on descend la poulie mobile 88 d'une distance additionnelle (par exemple, un autre 10 pieds). On reprend le sciage et la descente par étapes discrètes de la poulie mobile 88 jusqu'à ce que la coupure 82 soit terminée. Un échafaudage mobile 94 peut être utilisé pour assurer en tout temps un effort de sciage approprié sur le barrage B.

Avec référence à la figure 5, on remarque que les trous 70 et 74 (qui sont ceux destinés à recevoir un joint d'étanchéité J) ont été forés plus en profondeur (c'est-à-dire 4 à 5 pieds (1 pied = 0.3 m) plus profonds) dans le barrage B que les autres trous 62, 64, 66, 68, 72, 76, 78 et 80 et que la coupure sciée 82, le joint d'étanchéité J rejoignant ou presque le fond du trou 70. Les renforts 26 sont dimensionnés en longueur de sorte qu'ils se prolongent vers le bas au moins jusqu'aux extrémités inférieures des trous 62 et 64 adjacents au trou 70 dans lequel se situe le joint d'étanchéité J. Ceci a pour but d'empêcher la cellule 10 de se déformer en s'infiltrant dans les trous adjacents, ce qui pourrait endommager la cellule 10 et peut-être en causer la rupture, surtout du côté sans eau (c'est-à-dire du côté du trou 64) où il y a peu de résistance à la déformation. Ces renforts 26 ne sont pas installés pour la portion de la cellule 10 se situant plus bas que le fond des trous adjacents 62 et 64. Avec cette configuration, la cellule 10 peut sur toute sa circonférence épouser les murs du trou 70 situés plus bas que le chevauchement avec les trous 62 et 64 puisque la cellule 10 ne comprend pas de renfort à ce niveau, ceci afin d'empêcher l'eau de contourner l'extrémité inférieure de la cellule 10.

Il est également possible d'installer un joint d'étanchéité supplémentaire dans le trou 74 destiné à cet effet qui pourrait servir de remplacement au joint du trou 70, soit pour son ajustement ou autres manipulations. Dans le cas de l'installation d'un joint d'étanchéité J dans le trou 74, il est nécessaire de remplir sa cellule 10 de liquide pour lui donner une forme et empêcher qu'elle ne s'endommage. Cependant, la cellule 10 du trou 74 n'est pas mise sous tension à l'aide d'un gaz afin de permettre à l'eau se retrouvant dans les trous 64, 66 et 72 à la suite de pluies ou d'infiltration à travers le béton du barrage B (c'est-à-dire dans les trous situés entre les deux joints d'étanchéité J) de s'écouler entre le deuxième joint J et les parois de son trou 74.

Par exemple, le deuxième joint J peut servir au réajustement du premier joint d'étanchéité J dans son trou 70. En effet, suite à des mouvements du barrage B, la cellule 10 du premier joint d'étanchéité J peut être devenue légèrement tordue dans son trou 70. Pour éviter la rupture de la cellule 10, il est souhaitable de diminuer la pression dans la cellule 10, par exemple en enlevant de celle-ci la tension due au gaz, de façon à éliminer l'adhérence de la cellule 10 aux parois du trou 70. En ce faisant, la cellule 10 reprend de façon naturelle une forme non tordue. La cellule 10 peut être ensuite mise à nouveau sous tension. Cependant, pour procéder au réajustement de la cellule 10, il est d'abord nécessaire d'assurer l'étanchéité du barrage B au niveau de la coupure qui y a été pratiquée. Ainsi, avant d'enlever la tension dans la cellule 10 du trou 70, on met sous tension à l'aide d'un gaz la cellule du deuxième joint d'étanchéité J préalablement positionné dans le trou 74. Lorsque la cellule 10 du premier joint J a été réajustée dans son trou 70, on enlève la tension du joint J du trou 74, permettant ainsi au léger volume d'eau emprisonné entre les joints d'étanchéité J des trous 70 et 74 de s'écouler du côté aval du barrage B, ce qui prévient une rupture possible des joints J due au gel de la masse d'eau contenue dans la coupure entre les deux joints d'étanchéité J. L'utilisation d'un deuxième joint J dans le trou 74 facilite la réparation ou l'ajustement du joint J du trou 70 puisqu'il n'y a pas d'écoulement d'eau au travers de la coupure pendant les travaux effectués sur le joint J du trou 70. La réparation et le réajustement du joint J du trou 70 deviennent, en effet, beaucoup plus faciles s'il se font dans de l'eau stable, c'est-à-dire sans écoulement ou courant.

Également, si le joint d'étanchéité J du trou 70 fait défaut, on peut simplement procéder au gonflement par mise sous tension du joint supplémentaire J du trou 74 pour assurer l'étanchéité du joint d'expansion E, ce qui élimine la nécessité de réparer immédiatement le joint J du trou 70.

La figure 1A illustre une autre terminaison inférieure du joint d'étanchéité J. Plus particulièrement, une poulie 96 est montée à rotation dans l'embout inférieur 20, et un câble 98 est engagé autour de la poulie 96 et remonte ensuite verticalement de part et d'autre de la cellule 10. La poulie 96 et le câble 98 remplacent les tiges de guidage 60 utilisées lors de l'installation du joint d'étanchéité J. Le câble 98 passe au travers des anneaux de guidage 44 et ressort au-dessus du barrage B. Le joint d'étanchéité J est descendu dans le trou 70 en étant suspendu par le câble 98. Une fois l'installation terminée, le câble 98 peut être retiré en tirant sur l'une de ses extrémités, ou il peut être laissé en place dans le trou 70 pour le réajustement possible futur du joint J ou pour son remplacement. Si le câble 98 est retiré du joint d'étanchéité J, le retrait subséquent de ce dernier de son trou 70 devra être effectué à l'aide des tiges de guidage 60.

Avec référence aux figures 8 à 15, le dispositif de guidage suivant la présente invention pour forages à chevauchement et parallèles entre eux peut prendre plusieurs formes en fonction de la position du trou qui doit être creusé par rapport aux deux trous déjà forés et dont la verticalité est établie. De façon générale, le dispositif de guidage assure le lien à l'aide de coussinets entre un guide coulissant dans un ou des trous existants et un trépan. Ceci permet de forer parallèlement un trou à celui ou à ceux existants. En répétant les mêmes opérations, une coupure peut être réalisée. Les guides ont des formes et des dimensions appropriées pour coulisser dans le ou les trous existants. Par exemple, à la figure 8, on procède au forage du trou 72 situé entre les trous 64 et 66 déjà forés à l'aide du dispositif de forage à verticalité contrôlée et qui vont servir de guide. Comme le dispositif de forage se situe entre les deux trous-guides 64 et 66, le dispositif de guidage sera du type "G-F-G", où "G" indique un guide et "F" indique un forage; par conséquent, "G-F-G" indique le forage d'un trou entre deux trous existants et verticaux qui servent de guide afin d'assurer la verticalité du nouveau trou et afin d'assurer que les trois trous ont des axes longitudinaux situés dans le même plan vertical. Comme les trois trous 64, 66 et 72 sont d'un même diamètre de quatre (4) pouces (1 pouce = 25.4 mm), le dispositif de guidage requis pour forer le trou 72 en utilisant comme guide les trous 64 et 66 sera du type "G4-F4-G4", où les chiffres indiquent les diamètres des trous-guides et du trou à forer.

Sur la figure 8, les deux dispositifs de guidage "G4-F4-G4" qui sont chacun identifiés par le numéro de référence 100 sont disposés à distance verticale l'un au-dessus de l'autre et sont reliés par des tiges d'ajustement 102 qui sont vissées aux dispositifs de guidage 100 de façon à permette leur ajustement afin que les deux dispositifs de guidage 100 soient parallèles entre eux. Un dispositif de forage généralement indiqué par F est monté à rotation aux dispositifs de guidage 100 à l'aide de coussinets 104 pour assurer aux dispositifs de guidage 100 un mouvement purement en translation vers le bas le long des trous-guides 64 et 66 alors que le dispositif de forage F se déplace vers le bas tout en tournant sur lui-même pour creuser le trou 72. Le dispositif de forage F comprend les pièces conventionnelles suivantes: un train des tiges 106, un manchon aléseur 108, un carottier 110 et une couronne de carottage 112. Une des tiges d'ajustement 102 est munie de guides flexibles 114 pour éviter le coinçage du dispositif de forage F. Chaque guide flexible 114 a la forme d'un disque horizontal de diamètre légèrement inférieur au diamètre du trou 66 de la figure 8.

La figure 9 illustre le dispositif de guidage 100 qui comprend le coussinet assemblage forcé 104, un disque-guide 116 de diamètre à peu près identique au trou-guide 64 et muni d'une ouverture 118 pour recevoir la tige d'ajustement 102, et une rallonge 120 destinée pour le trou-guide 66 et également pourvue d'une ouverture 122 pour recevoir l'autre tige d'ajustement 102. Une pièce quelconque de connexion 117 joint le coussinet assemblage forcé 104 au disque-guide 116. Cette pièce de connexion 117 a une largeur légèrement inférieure au chevauchement des trous 64 et 72. De façon similaire, la largeur de la rallonge 120 correspond au chevauchement des trous 72 et 66. Le disque-guide 116 et la rallonge 120 assure la descente verticale du dispositif de forage F, empêchant ce dernier de suivre un mouvement hélicoïdal que l'activité de forage encouragerait. Un tel comportement empêcherait l'obtention d'un trou parallèle à deux autres et disposé dans un même plan vertical. On comprend que le disque-guide 116 assure la verticalité du nouveau trou foré par le dispositif de forage F alors que la rallonge 120 assure que les trois trous soient d'axes longitudinaux coplanaires. En effet, la rallonge 120 et le guide flexible 114 permettent un jeu entre les trous qui ne sont évidemment pas parfaitement parallèles; de plus, ils empêchent le mouvement de spirale du dispositif de forage F. Le caoutchouc du guide flexible 114 empêche le coinçage du dispositif de forage F puisqu'il a un comportement similaire à celui d'une brosse à cheminée étant donné qu'il suit les parois du trou tout en défléchissant sur sa périphérie à l'encontre de la direction du mouvement du dispositif de forage F.

On note que le remplacement de la rallonge 120 par un deuxième disque-guide identique au disque-guide 116 (et, par conséquent, de diamètre similaire à celui du trou-guide 66) offrirait au dispositif de guidage 100 une structure trop rigide, ce qui occasionnerait le bris de ce dernier et/ou peut-être celui du dispositif de forage F. Les largeurs de la pièce de connexion 117 et de la rallonge 120 assurent l'alignement des trous 64, 66 et 72 puisqu'ils offrent peu de jeu par rapport à la largeur de leur chevauchement respectif. Également, le remplacement du disque-guide 116 par une rallonge similaire à la rallonge 120 ferait en sorte que le dispositif de forage F exercerait trop de pression sur les arêtes définies par les chevauchements des trous concernés.

Les figures 10 et 11 illustrent un dispositif de guidage 123 du type "G4-F8-G4" qui est utilisé pour forer un trou de 8 pouces de diamètre entre deux trous-guides de 4 pouces de diamètre chacun. Ce type de dispositif est utilisé pour forer les trous 70 et 74 (qui reçoivent les joints d'étanchéité J) entre les trous 62 et 64, et 66 et 68, respectivement. Dans ce cas, un adaptateur 124 tel qu'illustré à la figure 12 est utilisé pour monter à rotation le dispositif de guidage "G4-F8-G4" au dispositif de forage F. L'adaptateur 124 comprend entre autres un coussinet 126 et une bague de retenue 128.

Les figures 13 et 14 illustrent un dispositif de guidage 130 du type "F4-G4-G8" qui est utilisé, lorsque les deux trous-guides se chevauchent, pour forer un troisième trou vertical chevauchant l'un des deux trous-guides. Le dispositif de guidage 130 est utilisé pour forer le trou 76 des figures 5 et 6 qui a 4 pouces de diamètre, les trous-guides étant les trous 62 et 70 ayant respectivement 4 et 8 pouces de diamètre.

La figure 15 illustre un dispositif de guidage 132 du type "F4-G4-G4" qui est également utilisé lorsque les deux trous-guides se chevauchent pour forer un troisième trou vertical chevauchant l'un des deux trous-guides. Le dispositif de guidage 132 est utilisé pour forer le trous 78 et 80 des figures 5 et 6 qui ont chacun 4 pouces de diamètre. Les trous-guides pour le trou à forer 78 sont les trous 76 et 62, tandis que pour le trou 80, les trous-guides sont les trous 78 et 76, tous ces trous ayant chacun 4 pouces de diamètre.

On prévoit également le forage d'un trou le long d'un joint, le trou étant destiné à recevoir un joint d'étanchéité J tel que décrit précédemment, dans lequel est utilisé un dispositif de guidage similaire au dispositif de guidage 100, mais dans lequel le disque-guide 116 et la rallonge 120 sont remplacés par des lamelles qui suivent la forme du joint sur lequel on désire forer un trou pour recevoir le joint d'étanchéité J.

Ainsi, nous avons produit un joint d'expansion flexible pouvant répondre aux mouvements d'un barrage en béton qui sont de l'ordre d'à peu près 0,5 pouce par année. Le joint absorbera ou compensera pour les mouvements relatifs des diverses sections du barrage. En effet, pour corriger des anomalies dans le comportement des barrages, il est parfois nécessaire d'y pratiqué des coupures. Le présent dispositif permet d'assurer le scellement des coupures et de suivre les déformations ultérieures des barrages. Le dispositif est composé de deux cellules en matériaux élastiques renforcés, insérées dans des trous pré-forés dans le plan de la coupure. Pour la mise en tension des cellules, ces dernières sont remplies d'un liquide (non gélif si requis) et une pression additionnelle de gaz y est maintenue.

La verticalité des trous et du joint d'étanchéité doit être assurée; de plus, le joint d'étanchéité ne doit pas être tordu lors de son installation.

Le dispositif de guidage pour forages à chevauchement et parallèles entre eux a été développé pour l'installation de cellules d'étanchéité, lors de coupures de barrages. Toutefois, le même dispositif peut être utilisé pour toutes autres coupures par forages.

Le joint d'étanchéité J suivant la présente invention peut également être utilisé dans d'autres applications impliquant des ouvrages en béton et peut-être dans des ouvrages fait de d'autres matériaux rigides, tels que la pierre, les structures métalliques, etc. On prévoit l'utilisation du présent joint J dans des bâtisses industrielles en béton où il y a mouvement relatif entre, par exemple, deux murs de ces dernières qui sont en contact. Également, le joint J pourrait être implanté dans des bassins de récupération d'huile qui subissent des efforts dus, par exemple, au sol afin de résoudre les problèmes environnementaux qui peuvent être causés par une fuite d'huile dans le sol. Dans le cas de produits tels que l'huile et l'essence, il faudra utiliser un autre matériau que le caoutchouc pour construire la cellule, étant donné que le caoutchouc serait attaqué par ces substances. La cellule pourrait être construite d'un matériau synthétique, ou la cellule en caoutchouc pourrait être enduite d'un revêtement protecteur.

Le joint d'étanchéité J pourrait également être utilisé pour des travaux de réparation, temporaires ou permanents. Par exemple, lors d'injection de coulis dans une coupure d'un barrage, le coulis de ciment ou autre qui a été injecté fuit fréquemment par la coupure elle-même du côté aval et du côté amont avant qu'il ne puisse se solidifier. Par conséquent, on installe facilement en aval de la coupure une structure de colmatage temporaire pour empêcher le coulis de fuir. Cependant, il est difficile de sceller le côté amont de la coupure à cause de la présence d'eau. Ainsi, près de l'extrémité amont de la coupure, on pourrait installer le présent joint d'étanchéité dans la coupure afin de fermer la coupure et ainsi empêcher l'écoulement du coulis injecté subséquemment dans la coupure. Une fois le coulis suffisamment pris pour l'empêcher de fuir de la coupure du barrage, on peut retirer le joint d'étanchéité qui a été préalablement enduit d'un lubrifiant adéquat pour en faciliter le retrait.

On prévoit également l'utilisation du présent joint d'étanchéité pour le scellement d'un joint d'expansion déjà prévu lors de la construction de l'ouvrage en béton. Plus particulièrement, un bassin de récupération, par exemple, pourrait être coffré de façon à définir des coupures sur deux de ses murs. Lors du coffrage, un trou serait ménagé sur chacune des coupures. Un tube en carton pourrait être installé dans chaque trou et être subséquemment enlevé avant l'installation du joint d'étanchéité. L'installation de joints d'étanchéité dans les trous de chacun des joints d'expansion scellerait le bassin et lui permettrait de bouger au cours des années sans briser.

## Revendications

1. Un dispositif d'étanchéité (J) pour scellement d'une ouverture pratiquée dans un ouvrage en béton (B) comprenant une cellule (10) faite d'un matériau élastique et incluant au moins une section tubulaire, la cellule (10) étant pourvue à ses extrémités supérieure (12) et inférieure (14) respectivement d'un embout supérieur rigide (16) et d'un embout inférieur rigide (20), la surface inférieure de l'embout inférieur (20) étant formée pour faciliter l'insertion du dispositif d'étanchéité (J) dans un trou (70) pratiqué sur l'ouverture, des moyens (36) peu extensibles montés entre les embouts supérieur et inférieur (16,20) pour empêcher l'étirement longitudinal de la cellule (10), la cellule (10) incluant des moyens de renfort (26) espacés l'un par rapport à l'autre et disposés vis-à-vis l'ouverture pour empêcher la déformation de la cellule (10) dans l'ouverture, un espace périphérique continu étant défini sur la cellule (10) entre les extrémités inférieures des moyens de renfort (26) et l'extrémité supérieure de l'embout inférieur (20), et des moyens (44,46,54,60; 44,96,98) pour permettre le positionnement et l'installation du dispositif d'étanchéité (J).

2. Le dispositif d'étanchéité (J) de la revendication 1 dans lequel les embouts supérieur et inférieur (16,20) comportent chacun au moins une section cylindrique, la cellule (10) formant un cylindre recouvrant de façon fixe à ses extrémités supérieure et inférieure (12,14) les sections cylindriques respectives des embouts supérieur et inférieur (16,20).

3. Le dispositif d'étanchéité (J) de la revendication 2 dans lequel les sections cylindriques des embouts supérieur et inférieur (16,20) ménagent chacun des arrêts de retenue (18,22) sur leur périphérie respective qui engagent respectivement les extrémités supérieure et inférieure (12,14) de la cellule cylindrique (10) pour assurer leur assemblage, des collets de retenue (28,24) étant montés autour des extrémités supérieure et inférieure (12,14) de la cellule (10) pour renforcer ledit assemblage.

4. Le dispositif d'étanchéité (J) de la revendication 2 dans lequel l'embout inférieur (20) comprend une section semi-sphérique à l'extrémité inférieure de sa section cylindrique.

5. Le dispositif d'étanchéité (J) de la revendication 1 dans lequel les moyens peu extensibles comprennent au moins un câble (36) monté tendu dans la cellule (10), les extrémités de chaque câble (36) étant fixées à leur embout respectif à l'aide de moyens d'attache (38,40,42).

6. Le dispositif d'étanchéité (J) de la revendication 5 dans lequel lesdits moyens d'attache (38,40,42) comprennent des boulons à oeillet (38,40).

7. Le dispositif d'étanchéité (J) de la revendication 2 dans lequel l'embout supérieur (16) comprend un anneau de retenue (30) monté à l'intérieur de sa section cylindrique, l'anneau de retenue (30) pratiquant une ouverture centrale filetée recevant un bouchon (32), le bouchon (32) incluant une ouverture (34) reliée à une tubulure (33) qui comprend une soupape (35) pour permettre l'entrée d'au moins un fluide dans la cellule (10) et assurer le maintien de la pression désirée de fluide dans la cellule (10).

8. Le dispositif d'étanchéité (J) de la revendication 1 dans lequel la cellule (10) est faite d'un matériau caoutchouteux.

9. Le dispositif d'étanchéité (J) de la revendication 1 dans lequel l'embout supérieur (16) comprend des moyens (19) pour la manipulation du dispositif d'étanchéité (J) et pour sa fixation à l'ouvrage.

10. Le dispositif d'étanchéité (J) de la revendication 1 dans lequel les moyens de renfort (26) comprennent deux renforts longitudinaux (26) disposés extérieurement de part et d'autre de la cellule (10).

11. Le dispositif d'étanchéité (J) de la revendication 10 dans lequel les renforts (26) sont faits d'un matériau rigide et sont collés sur la cellule (10).

12. Le dispositif d'étanchéité (J) de la revendication 10 dans lequel lesdits moyens (44,96,98) pour permettre le positionnement et l'installation du dispositif d'étanchéité (J) comprennent des anneaux de guidage (44) disposés extérieurement le long de chacun des renforts (26) et s'engageant dans l'ouverture, une poulie (96) montée verticalement au bas de l'embout inférieur (20), et un câble (98) engageant la poulie (96) et remontant de part et d'autre de la cellule (10) tout en passant au travers des anneaux de guidage (44) respectifs des deux renforts (26).

13. Le dispositif d'étanchéité (J) de la revendication 12 dans lequel lesdits anneaux de guidage (44) ont chacun une base arquée disposée entre la cellule (10) et un renfort respectif (26).

14. Le dispositif d'étanchéité (J) de la revendication 10 dans lequel le dispositif d'installation (44,46,54,60) comprend des anneaux de guidage (44) disposés le long de chacun des renforts (26) et s'engageant dans l'ouverture, au moins une tige de guidage (60) passant au travers des anneaux de guidage (44) respectifs d'un des deux renforts (26) et incluant une extrémité inférieure filetée, un manchon de guidage (46) monté au bas du renfort (26) et ménageant une ouverture centrale filetée pour recevoir une tige de guidage (60) respective.

15. Le dispositif d'étanchéité (J) de la revendication 14 dans lequel lesdits anneaux de guidage (44) ont chacun une base arquée disposée entre la cellule (10) et un renfort respectif (26), une tige de guidage (60) étant prévue pour les anneaux de guidage (44) de chacun des deux renforts (26).

16. Une méthode d'installation d'un joint d'expansion (E) dans un ouvrage en béton (B) à l'aide d'un dispositif d'étanchéité (J) qui comprend une cellule tubulaire et élastique (10) pourvue à ses extrémités supérieure et inférieure (12,14) respectivement d'un embout supérieur rigide (16) et d'un embout inférieur rigide (20), la surface inférieure de l'embout inférieur (20) étant formée pour faciliter l'insertion du dispositif d'étanchéité (J) dans l'ouvrage en béton (B), des moyens peu extensibles (36) montés entre les embouts supérieur et inférieur (16,20), la cellule (10) incluant des moyens de renfort (26) espacés l'un par rapport à l'autre, un espace périphérique continu étant défini sur la cellule (10) entre les extrémités inférieures des moyens de renfort (26) et l'extrémité supérieure de l'embout inférieur (20), la méthode incluant les étapes suivantes:
a) le forage d'un premier trou (70) dans l'ouvrage destiné à recevoir le dispositif d'étanchéité (J);
b) l'installation du dispositif d'étanchéité (J) dans le premier trou (70), les moyens de renfort (26) étant positionnés dans le sens d'écoulement;
c) le remplissage sous pression requise de la cellule (10) à l'aide d'au moins un fluide approprier et
d) l'achèvement du joint d'expansion (E) par la coupure de l'ouvrage dans le sens d'écoulement et vis-à-vis lesdits moyens de renfort (26), la coupure communiquant avec le premier trou (70) et donc avec le dispositif d'étanchéité (J) et se prolongeant à une profondeur correspondant sensiblement aux extrémités inférieures des moyens de renfort (26) de sorte que la section de la cellule (10) située entre les moyens de renfort (26) et l'embout inférieur (20) épouse sur sa périphérie les murs du premier trou (70).

17. La méthode de la revendication 16 dans laquelle, avant l'étape b), un deuxième et un troisième trous (62, 64) sont forés avec chevauchement de part et d'autre du premier trou (70) pour faciliter les étapes b) et d).

18. La méthode de la revendication 17 dans laquelle, avant l'étape d), un quatrième trou (74) est foré, ce quatrième trou (74) étant destiné à recevoir un deuxième dispositif d'étanchéité (J) similaire à celui du premier trou (70), et dans laquelle, dans l'étape d), la coupure d'achèvement du joint d'expansion (E) rejoint également le quatrième trou (74).

19. La méthode de la revendication 18 dans laquelle un deuxième dispositif d'étanchéité (J) est installé dans le quatrième trou (74) et est ensuite rempli d'un fluide approprié.

20. La méthode de la revendication 19 dans laquelle le deuxième dispositif d'étanchéité (J) est rempli sous pression requise à l'aide d'au moins un fluide approprié.

21. La méthode de la revendication 17 dans laquelle le dispositif d'étanchéité (J) comprend un dispositif d'installation (44,96,98) incluant des anneaux de guidage (44) disposés extérieurement le long de chacun des moyens de renfort (26), une poulie (56) étant montée verticalement au bas de l'embout inférieur (20), et un câble (98) étant engagé sur la poulie (96) et remontant de part et d'autre de la cellule (10) tout en passant au travers des anneaux de guidage (44) respectifs des moyens de renfort (26), la méthode comprenant, dans l'étape b), l'introduction des anneaux de guidage (44) dans les deuxième et troisième trous (62,64).

22. La méthode de la revendication 17 dans laquelle le dispositif d'étanchéité (J) comprend un dispositif d'installation (44,46,54,60) incluant des anneaux de guidage (44) disposés extérieurement le long de chacun des moyens de renfort (26), au moins une tige de guidage (60) passant au travers des anneaux de guidage (44) respectifs d'un des moyens de renfort (26) et incluant une extrémité inférieure filetée, un manchon de guidage (46) monté au bas du moyen de renfort (26) et ménageant une ouverture centrale filetée recevant une tige de guidage (60) respective, la méthode comprenant, dans l'étape b), l'introduction de la tige de guidage (60) et de ses anneaux de guidage (44) dans l'un des deuxième et troisième trous (62,64), la fixation du dispositif d'étanchéité (J) à l'ouvrage, puis le dévissage de la tige de guidage (60) du manchon de guidage (46), et enfin le retrait de la tige de guidage (60) de son trou (62,64).

23. La méthode de la revendication 22 dans laquelle une tige de guidage (60) est utilisée pour chacun des deuxième et troisième trous (62,64), chaque tige de guidage (60) étant associée à un des moyens de renfort (26).

24. Une méthode pour le réajustement d'un dispositif d'étanchéité (J) d'un joint d'expansion (E) coupé dans un barrage en béton (B), le dispositif d'étanchéité (J) comprenant une cellule tubulaire et élastique (10) pourvue à ses extrémités supérieure (12,14) et inférieure respectivement d'un embout supérieur rigide (16) et d'un embout inférieur rigide (20), la surface inférieure de l'embout inférieur (20) étant formée pour faciliter l'insertion du dispositif d'étanchéité (J) dans le barrage, des moyens peu extensibles (36) montés entre les embouts supérieur et inférieur (16,20), la cellule (10) incluant des moyens de renfort (26) espacés l'un par rapport à l'autre, un espace périphérique continu étant défini sur la cellule (10) entre les extrémités inférieures des moyens de renfort (26) et l'extrémité supérieure de l'embout inférieur (20), le dispositif d'étanchéité (J) étant installé dans un premier trou (70) ménagé dans le barrage en béton (B) sur le joint d'expansion (E), ses moyens de renfort (26) étant positionnés dans le sens d'écoulement de l'eau, la cellule (10) étant en tension à l'aide d'au moins un fluide approprié, un deuxième dispositif d'étanchéité (J), similaire au dispositif d'étanchéité (J) du premier trou (70), étant installé dans un deuxième trou (74) également pratiqué sur le joint d'expansion (E), la méthode incluant les étapes suivantes:
a) la mise en tension du deuxième dispositif d'étanchéité (J) sous pression requise à l'aide d'au moins un fluide approprié;
b) la dépressurisation au moins partielle du dispositif d'étanchéité (J) du premier trou (70) de façon à éliminer son adhérence avec les parois du premier trou (70) et à lui permettre de reprendre sa position dans le premier trou (70); et
c) la mise en tension du dispositif d'étanchéité (J) du premier trou (70).

25. La méthode de la revendication 24 dans laquelle l'installation et la mise en tension du deuxième dispositif d'étanchéité (J) comprennent le forage d'un deuxième trou (74) sur le joint d'expansion (E) destiné à recevoir le deuxième dispositif d'étanchéité (J) et le remplissage du deuxième dispositif d'étanchéité (J) sous pression requise à l'aide du fluide approprié.

26. La méthode de réajustement de la revendication 24 dans laquelle l'étape d) consiste à dépressuriser le deuxième dispositif d'étanchéité (J).

27. Une méthode de remplacement d'un dispositif d'étanchéité (J) d'un joint d'expansion (E) coupé dans un barrage en béton (B), le dispositif d'étanchéité (J) comprenant une cellule tubulaire et élastique (10) pourvue à ses extrémités supérieure (12,14) et inférieure respectivement d'un embout supérieur rigide (16) et d'un embout inférieur rigide (20), la surface inférieure de l'embout inférieur (20) étant formée pour faciliter l'insertion du dispositif d'étanchéité (J) dans le barrage, des moyens peu extensibles (36) montés entre les embouts supérieur et inférieur (16,20), la cellule (10) incluant des moyens de renfort (26) espacés l'un par rapport à l'autre, un espace périphérique continu étant défini sur la cellule (10) entre les extrémités inférieures des moyens de renfort (26) et l'extrémité supérieure de l'embout inférieur (20), le dispositif d'étanchéité (J) étant installé dans un premier trou (70) ménagé dans le barrage en béton (B) sur le joint d'expansion (E), ses moyens de renfort (26) étant positionnés dans le sens d'écoulement de l'eau, la cellule (10) étant en tension à l'aide d'au moins un fluide approprié, un deuxième dispositif d'étanchéité (J), similaire au dispositif d'étanchéité (J) du premier trou (70), étant installé dans un deuxième trou (74) également pratiqué sur le joint d'expansion (E), la méthode incluant les étapes suivantes:
a) la mise en tension du deuxième dispositif d'étanchéité (J) sous pression requise à l'aide d'au moins un fluide approprié;
b) la dépressurisation du dispositif d'étanchéité (J) du premier trou (70);
c) le vidage du fluide contenu dans le dispositif d'étanchéité (J) du premier trou (70) et son retrait du premier trou (70); et
d) l'installation d'un nouveau dispositif d'étanchéité (J) dans le premier trou (70), son remplissage subséquent à l'aide d'au moins un fluide approprié, et la mise en tension du nouveau dispositif d'étanchéité (J) du premier trou (70).

28. La méthode de la revendication 27 dans laquelle l'installation et la mise en tension du deuxième dispositif d'étanchéité (J) comprennent le forage d'un deuxième trou (74) sur le joint d'expansion (E) destiné à recevoir le deuxième dispositif d'étanchéité (J) et le remplissage du deuxième dispositif d'étanchéité (J) sous pression requise à l'aide du fluide approprié.

29. La méthode de remplacement de la revendication 27 dans laquelle l'étape e) consiste à dépressuriser le deuxième dispositif d'étanchéité (J).

## Patentansprüche

1. Dichtungsvorrichtung (J) zum Abdichten einer in einem Betonerzeugnis (B) ausgebildeten Öffnung, umfassend eine Zelle (10), die aus einem elastischen Werkstoff gefertigt ist und wenigstens einen röhrenförmigen Abschnitt enthält, welche Zelle (10) an ihren oberen (12) und unteren (13) Enden jeweils mit einem oberen starren Ansatz (16) und einem unteren starren Ansatz (20) versehen ist, wobei die untere Fläche des unteren Ansatzes (20) so geformt ist, dass sie das Einfügen der Dichtungsvorrichtung (J) in ein auf der Öffnung ausgebildetes Loch (70) erleichtert, gering dehnbare Mittel (36), die zwischen den oberen und unteren Ansätzen (16, 20) angebracht sind, um das Ausdehnen in Längsrichtung der Zelle (10) zu verhindern, welche Zelle (10) Verstärkungsmittel (26) einschließt, die voneinander beabstandet sind und gegenüber der Öffnung angeordnet sind, um die Verformung der Zelle (10) in der Öffnung zu verhindern, wobei ein kontinuierlicher Umfangsraum auf der Zelle (10) zwischen den unteren Enden der Verstärkungsmittel (26) und dem oberen Ende des unteren Ansatzes (20) definiert ist, und Mittel (44, 46, 54, 60; 44, 96, 98) um die Positionierung und die Einrichtung der Dichtungsvorrichtung (J) zu ermöglichen.

2. Dichtungsvorrichtung (J) nach Anspruch 1, bei welcher die oberen und unteren Ansätze (16, 20) jeweils wenigstens einen zylindrischen Abschnitt aufweisen, wobei die einen Zylinder formende Zelle (10) an ihren oberen und unteren Enden (12, 14) die jeweiligen zylindrischen Abschnitte der oberen und unteren Ansätze fest überdeckt (16, 20).

3. Dichtungsvorrichtung (J) nach Anspruch 2, bei welcher die zylindrischen Abschnitte der oberen und unteren Ansätze (16, 20) jeweils Haltearretierungen auf ihrem jeweiligen Umfang bilden (18, 22), welche zu deren Fügung jeweils in Eingriff mit den oberen und unteren Enden (12, 14) der zylindrischen Zelle (10) sind, wobei Haltebünde (28, 24) um die oberen und unteren Enden (12, 14) der Zelle (10) montiert sind, um die Fügung zu verstärken.

4. Dichtungsvorrichtung (J) nach Anspruch 2, bei welcher der untere Ansatz (20) einen halb-sphärischen Abschnitt am unteren Ende seines zylindrischen Abschnitts umfasst.

5. Dichtungsvorrichtung (J) nach Anspruch 1, bei welcher die wenig dehnbaren Mittel wenigstens ein in der Zelle (10) gespanntes Kabel (36) umfassen, wobei die Enden von jedem Kabel (36) an ihrem jeweiligen Ansatz mithilfe von Befestigungsmitteln (38, 40, 42) befestigt sind.

6. Dichtungsvorrichtung (J) nach Anspruch 5, bei welcher die Befestigungsmittel (38, 40, 42) Augbolzen (38, 40) umfassen.

7. Dichtungsvorrichtung (J) nach Anspruch 2, bei welcher der obere Ansatz (16) einen im Innern des zylindrischen Abschnitts montierten Haltering (30) umfasst, welcher Haltering (30) eine, einen Stopfen (32) aufnehmende mittige Gewindeöffnung ausbildet, welcher Stopfen (32) eine Öffnung (34) enthält, die mit einem Anschlussstutzen (33) verbunden ist, der ein Ventil (35) umfasst, um den Eintritt von wenigstens einem Fluid in die Zelle (10) zu ermöglichen und das Aufrechterhalten des gewünschten Fluiddrucks in der Zelle (10) zu gewährleisten.

8. Dichtungsvorrichtung (J) nach Anspruch 1, bei welcher die Zelle (10) aus einem gummiartigen Material gefertigt ist.

9. Dichtungsvorrichtung (J) nach Anspruch 1, bei welcher der obere Ansatz (16) Mittel (19) für die Handhabung der Dichtungsvorrichtung (J) und für ihre Befestigung an dem Erzeugnis umfasst.

10. Dichtungsvorrichtung (J) nach Anspruch 1, bei welcher die Verstärkungsmittel (26) zwei Längsverstärkungen (26) umfassen, die außerhalb, beiderseitig der Zelle (10) angeordnet sind.

11. Dichtungsvorrichtung (J) nach Anspruch 10, bei welcher die Verstärkungen (26) aus einem starren Werkstoff gefertigt sind und auf die Zelle (10) geklebt sind.

12. Dichtungsvorrichtung (J) nach Anspruch 10, bei welcher die Mittel (44, 96, 98) zum Ermöglichen der Positionierung und der Einrichtung der Dichtungsvorrichtung (J) Führungsringe (44), die außerhalb, längs jeder der Verstärkungen (26) angeordnet sind und in die Öffnung eingefügt sind, eine vertikal am unteren Ende des unteren Ansatzes (20) montierte Seilrolle (96), und ein in die Seilrolle (96) greifendes Kabel (98), das beiderseits der Zelle (10) wieder aufsteigt und hierbei durch die jeweiligen Führungsringe (44) der beiden Verstärkungen (26) hindurchtritt, umfassen.

13. Dichtungsvorrichtung (J) nach Anspruch 12, bei welcher die Führungsringe (44) jeweils eine gebogene Basis aufWeisen, die zwischen der Zelle (10) und einer jeweiligen Verstärkung (26) angeordnet ist.

14. Dichtungsvorrichtung (J) nach Anspruch 10, bei welcher die Vorrichtung zum Einrichten (44, 46, 54, 60) Führungsringe (44), die längs jeder der Verstärkungen (26) angeordnet sind und in die Öffnung eingefügt sind, wobei wenigstens eine Führungsstange (60) durch die jeweiligen Führungsringe (44) einer der beiden Verstärkungen (26) hindurchtritt und ein unteres Gewindeende enthält, eine Führungsmuffe (46), die am unteren Ende der Verstärkung (26) angebracht ist und eine mittige Gewindeöffnung ausbildet um eine jeweilige Führungsstange (60) aufzunehmen, umfasst.

15. Dichtungsvorrichtung (J) nach Anspruch 14, bei welcher die Führungsringe (44) jeweils eine gebogene Basis aufweisen, die zwischen der Zelle (10) und einer jeweiligen Verstärkung (26) angeordnet ist, wobei eine Führungsstange (60) für die Führungsringe (44) jeder der beiden Verstärkungen (26) vorgesehen ist.

16. Verfahren zum Einrichten einer Dehnungsfuge (E) in einem Betonerzeugnis (B) mithilfe einer Dichtungsvorrichtung (J), die eine rohrförmige und elastische Zelle (10), die an ihren oberen und unteren Enden (12, 14) jeweils mit einem starren oberen Ansatz (16) und einem starren unteren Ansatz (20) versehen ist, wobei die untere Fläche des unteren Ansatzes (20) derart geformt ist, dass das Einfügen der Dichtungsvorrichtung (J) in das Betonerzeugnis (B) erleichtert ist, gering dehnbare Mittel (36), die zwischen den oberen und unteren Ansätzen (16, 20) angebracht sind, umfasst, welche Zelle (10) Verstärkungsmittel (26) einschließt, die voneinander beabstandet sind, wobei ein kontinuierlicher Umfangsraum auf der Zelle (10) zwischen den unteren Enden der Verstärkungsmittel (26) und dem oberen Ende des unteren Ansatzes (20) definiert ist, welches Verfahren die folgenden Schritte einschließt:
a) Bohren eines ersten Lochs (70) in das Erzeugnis, welches bestimmt ist, die Dichtungsvorrichtung (J) aufzunehmen;
b) Einrichten der Dichtungsvorrichtung (J) in dem ersten Loch (70), wobei die Verstärkungsmittel (26) in der Strömungsrichtung positioniert sind;
c) Füllen unter erforderlichem Druck der Zelle (10) mithilfe wenigstens eines geeigneten Fluids; und
d) Fertigstellen der Dehnungsfuge (E) durch die Abtrennung des Erzeugnis in der Strömungsrichtung und gegenüber den Verstärkungsmitteln (26), wobei die Abtrennung mit dem ersten Loch (70) und somit mit der Dichtungsvorrichtung (J) kommuniziert und sich in eine Tiefe verlängert, die im wesentlichen den unteren Enden der Verstärkungsmittel (26) entspricht, derart, dass sich der Abschnitt der Zelle (10), der sich zwischen den Verstärkungsmitteln (26) und dem unteren Ansatz (20) befindet, auf seinem Umfang den Wänden des ersten Lochs (70) anschmiegt.

17. Verfahren nach Anspruch 16, bei welchem vor dem Schritt b) ein zweites und ein drittes Loch (62, 64) mit Überlappung auf beiden Seiten des ersten Lochs (70) gebohrt werden, um die Schritte b) und d) zu erleichtern.

18. Verfahren nach Anspruch 17, bei welchem vor dem Schritt d) ein viertes Loch (74) gebohrt wird, wobei dieses vierte Loch (74) bestimmt ist, eine zweite Dichtungsvorrichtung (J) aufzunehmen, die ähnlich zu jener es ersten Lochs (70) ist, und bei welchem, in dem Schritt d) die Abtrennung zur Fertigstellung der Dehnungsfuge (E) gleichermaßen das vierte Loch (74) erreicht.

19. Verfahren nach Anspruch 18, bei welchem eine zweite Dichtungsvorrichtung (J) in dem vierten Loch (74) eingerichtet wird, und anschließend mit einem geeigneten Fluid gefüllt wird.

20. Verfahren nach Anspruch 19, bei welchem die zweite Dichtungsvorrichtung (J) mithilfe wenigstens eines geeigneten Fluids unter geeignetem Druck gefüllt wird.

21. Verfahren nach Anspruch 17, bei welchem die Dichtungsvorrichtung (J) eine Vorrichtung zur Einrichtung (44, 96, 98), welche außerhalb, längs jedem der Verstärkungsmittel (26) angeordnete Führungsringe (44) enthält, eine Seilrolle (96), welche am unteren Ende des unteren Ansatzes (20) vertikal angebracht ist, und ein Kabel (98), welches mit der Seilrolle (96) in Eingriff ist und beiderseits der Zelle (10) wieder aufsteigt und hierbei durch die jeweiligen Führungsringe (44) der Verstärkungsmittel (26) hindurchtritt, umfasst, welches Verfahren in Schritt b) das Einfügen der Führungsringe (44) in die zweiten und dritten Löcher (62, 64) umfasst.

22. Verfahren nach Anspruch 17, bei welchem die Dichtungsvorrichtung (J) eine Vorrichtung zur Einrichtung (44, 46, 54, 60), welche außerhalb, längs jedem der Verstärkungsmittel (26) angeordnete Führungsringe (44) enthält, wenigstens eine Führungsstange (60), welche durch die jeweiligen Führungsringe (44) eines Verstärkungsmittels (26) hindurchtritt und ein unteres Gewindeende enthält, eine Führungsmuffe (46), die an dem unteren Ende des Verstärkungsmittels (26) angebracht ist und eine mittige Gewindeöffnung ausbildet, die eine jeweilige Führungstange (60) aufnimmt, umfasst, welches Verfahren in Schritt b) das Einfügen der Führungsstange (60) und deren Führungsringe (44) in eines der zweiten und dritten Löcher (62, 64), die Befestigung der Dichtungsvorrichtung (J) am Erzeugnis, dann das Abschrauben der Führungsstange (60) von der Führungsmuffe (46), und schließlich das Herausziehen der Führungsstange (60) aus ihrem Loch (62, 64) umfasst.

23. Verfahren nach Anspruch 22, bei welchem eine Führungsstange (60) für jedes der zweiten und dritten Löcher (62, 64) verwendet wird, wobei jede Führungsstange (60) zu einem der Verstärkungsmittel (26) gehört.

24. Verfahren zum Nachstellen einer Dichtungsvorrichtung (J) einer in einen Betonstaudamm (B) geschnittenen Dehnungsfuge (E) welche Dichtungsvorrichtung (J) eine rohrförmige und elastische Zelle (10), die an ihren oberen und unteren Enden (12, 14) jeweils mit einem starren oberen Ansatz (16) und einem starren unteren Ansatz (20) versehen ist, wobei die untere Fläche des unteren Ansatzes (20) derart geformt ist, dass sie das Einfügen der Dichtungsvorrichtung (J) in den Staudamm erleichtert, gering dehnbare Mittel (36), die zwischen den oberen und unteren Ansätzen (16, 20) angebracht sind, umfasst, welche Zelle (10) Verstärkungsmittel (26) einschließt, die voneinander beabstandet sind, wobei ein kontinuierlicher Umfangsraum auf der Zelle (10) zwischen den unteren Enden der Verstärkungsmittel (26) und dem oberen Ende des unteren Ansatzes (20) definiert ist, welche Dichtungsvorrichtung (J) in einem in dem Betonstaudamm (B) auf der Dehnungsfuge (E) ausgebildeten ersten Loch (70) eingerichtet ist, ihre Verstärkungsmittel (26) in der Strömungsrichtung von Wasser positioniert sind, die Zelle (10) mithilfe wenigstens eines geeigneten Fluids unter Druck gesetzt ist, eine zweite Dichtungsvorrichtung (J), die zur Dichtungsvorrichtung (J) des ersten Lochs (70) ähnlich ist, in einem, gleichermaßen auf der Dehnungsfuge (E) ausgebildeten, zweiten Loch (74) eingerichtet ist, welches Verfahren die folgenden Schritte umfasst:
a) unter Spannung setzen der zweiten Dichtungsvorrichtung (J) unter dem erforderlichen Druck mithilfe wenigstens eines geeigneten Fluids;
b) wenigstens teilweise auf Außendruck bringen der Dichtungsvorrichtung (J) des ersten Lochs (70), um ihre Haftung an den Wänden des ersten Lochs (70) aufzuheben, und ihr zu ermöglichen, ihre Position in dem ersten Loch (70) wieder einzunehmen; und
c) unter Spannung setzen der Dichtungsvorrichtung (J) des ersten Lochs (70).

25. Verfahren nach Anspruch 24, bei welchem das Einrichten und das unter Spannung setzen der zweiten Dichtungsvorrichtung (J) das Bohren eines zweiten Lochs (74) auf der Dehnungsfuge (E), welches bestimmt ist, die zweite Dichtungsvorrichtung (J) aufzunehmen, und die Füllung der zweiten Dichtungsvorrichtung (J) unter dem erforderlichen Druck mithilfe des geeigneten Fluids umfasst.

26. Verfahren zum Nachstellen nach Anspruch 24, bei welchem der Schritt d) darin besteht, die zweite Dichtungsvorrichtung (J) auf Außendruck zu bringen.

27. Verfahren zum Ersetzen einer Dichtungsvorrichtung (J) einer in einen Betonstaudamm (B) geschnittenen Dehnungsfuge (E), welche Dichtungsvorrichtung (J) eine rohrförmige und elastische Zelle (10), die an ihren oberen und unteren Enden (12, 14) jeweils mit einem starren oberen Ansatz (16) und einem starren unteren Ansatz (20) versehen ist, wobei die untere Fläche des unteren Ansatzes (20) derart geformt ist, dass sie das Einfügen der Dichtungsvorrichtung (J) in den Staudamm erleichtert, gering dehnbare Mittel (36), die zwischen den oberen und unteren Ansätzen (16, 20) angebracht sind, umfasst, welche Zelle (10) Verstärkungsmittel (26) einschließt, die voneinander beabstandet sind, wobei ein kontinuierlicher Umfangsraum auf der Zelle (10) zwischen den unteren Enden der Verstärkungsmittel (26) und dem oberen Ende des unteren Ansatzes (20) definiert ist, welche Dichtungsvorrichtung (J) in einem in dem Betonstaudamm (B) auf der Dehnungsfuge (E) ausgebildeten ersten Loch (70) eingerichtet ist, ihre Verstärkungsmittel (26) in der Strömungsrichtung von Wasser positioniert sind, die Zelle (10) mithilfe wenigstens eines geeigneten Fluids unter Druck gesetzt ist, eine zweite Dichtungsvorrichtung (J), die zur Dichtungsvorrichtung (J) des ersten Lochs (70) ähnlich ist, in einem, gleichermaßen auf der Dehnungsfuge (E) ausgebildeten, zweiten Loch (74) eingerichtet ist, welches Verfahren die folgenden Schritte umfasst:
a) unter Spannung setzen der zweiten Dichtungsvorrichtung (J) unter dem erforderlichen Druck mithilfe wenigstens eines geeigneten Fluids;
b) auf Außendruck bringen der Dichtungsvorrichtung (J) des ersten Lochs (70);
c) Entleerung des in der Dichtungsvorrichtung (J) des ersten Lochs (70) enthaltenen Fluids und ihr Herausziehen aus dem ersten Loch (70); und
d) Einrichten einer neuen Dichtungsvorrichtung (J) in dem ersten Loch (70), ihre darauffolgende Füllung mithilfe wenigstens eines geeigneten Fluids, und unter Spannung setzen der neuen Dichtungsvorrichtung (J) des ersten Lochs (70).

28. Verfahren nach Anspruch 27, bei welchem die Einrichtung und das unter Spannung setzen der zweiten Dichtungsvorrichtung (J) das Bohren eines zweiten Lochs (74) auf der Dehnungsfuge (E), welches bestimmt ist, die zweite Dichtungsvorrichtung (J) aufzunehmen, und die Füllung der zweiten Dichtungsvorrichtung (J) unter dem erforderlichen Druck mithilfe des geeigneten Fluids umfasst.

29. Verfahren zum Ersetzen nach Anspruch 27, bei welchem der Schritt e) darin besteht, die zweite Dichtungsvorrichtung (J) auf Außendruck zu bringen.

## Claims

1. A sealing device (J) for sealing an opening defined in a concrete work (B) comprising a cell (10) made of an elastic material and including at least one tubular section, the cell (10) being provided at upper (12) and lower (14) ends thereof respectively with a rigid upper end member (16) and a rigid lower end member (20), the lower surface of the lower end member (20) being shaped for facilitating the insertion of the sealing device (J) in a hole (70) defined on the opening, not very extensible means (36) mounted between the upper and lower end members (16, 20) for preventing the longitudinal stretching of the cell (10), the cell (10) including reinforcement means (26) spaced one from the other and disposed opposite the opening for preventing the deformation of the cell (10) in the opening, a continuous peripheral space being defined on the cell (10) between the lower ends of the reinforcement means (26) and the upper end of the lower end member (20), and means (44, 46, 54, 60; 44, 96, 98) for allowing the positioning and the installation of the sealing device (J).

2. The sealing device (J) of Claim 1, wherein the upper and lower end members (16, 20) each comprise at least one cylindrical section, the cell (10) defining a cylinder fixedly covering at the upper and lower ends (12, 14) thereof the respective cylindrical sections of the upper and lower end members (16, 20).

3. The sealing device (J) of Claim 2, wherein the cylindrical sections of the upper and lower end members (16, 20) each define anchoring teeth (18, 22) on their respective periphery which engage respectively the upper and lower ends (12, 14) of the cylindrical cell (10) for ensuring the assembly thereof, retaining collars (28, 24) being mounted around the upper and lower ends (12, 14) of the cell (10) for reinforcing said assembly.

4. The sealing device (J) of Claim 2, wherein the lower end member (20) comprises a semi-spherical section at a lower end of the cylindrical section thereof.

5. The sealing device (J) of Claim 1, wherein the not very extensible means comprise at least one cable (36) mounted taut in the cell (10), the ends of each cable (36) being fixed at a respective end member by way of attachment means (38, 40, 42).

6. The sealing device (J) of Claim 5, wherein the attachment means (38, 40, 42) comprise eye-bolts (38, 40).

7. The sealing device (J) of Claim 2, wherein the upper end member (16) comprises a retaining ring (30) mounted inside of its cylindrical section, the retaining ring (30) defining a threaded central opening receiving a plug (32), the plug (32) including an opening (34) connected to a tubulure (33) which comprises a valve (35) for allowing the supply of at least one fluid in the cell (10) and ensuring that the desired fluid pressure is maintained in the cell (10).

8. The sealing device (J) of Claim 1, wherein the cell (10) is made of a rubber material.

9. The sealing device (J) of Claim 1, wherein the upper end member (16) comprises means (19) for the handling of the sealing device (J) and for the fixing thereof to the work.

10. The sealing device (J) of Claim 1, wherein the reinforcement means (26) comprise two longitudinal reinforcements (26) disposed exteriorly on one side and the other of the cell (10).

11. The sealing device (J) of Claim 10, wherein the reinforcements (26) are made of a rigid material and are adhesively mounted on the cell (10).

12. The sealing device (J) of Claim 10, wherein said means (44, 96, 98) for allowing the positioning and the installation of the sealing device (J) comprise guide rings (44) disposed exteriorly along each of the reinforcements (26) and engaging the opening, a pulley (96) vertically mounted at the bottom of the lower end member (20), and a cable (98) engaging the pulley (96) and coming back up onto opposite sides of the cell (10) while going through respective guide rings (44) of the two reinforcements (26).

13. The sealing device (J) of Claim 12, wherein said guide rings (44) each have an arched base disposed between the cell (10) and a respective reinforcement (26).

14. The sealing device (J) of Claim 10, wherein the installation device (44, 46, 54, 60) comprises guide rings (44) disposed along each of the reinforcements (26) and engaging the opening, at least one guide rod (60) extending through respective guide rings (44) of one of the two reinforcements (26) and including a threaded lower end, a guiding coupling sleeve (460 mounted at the bottom of the reinforcement (26) and defining a threaded central opening for receiving a respective guide rod (60).

15. The sealing device (J) of Claim 14, wherein said guide rings (44) each have an arched base disposed between the cell (10) and a respective reinforcement (26), a guide rod (60) being provided for the guide rings (44) of each of the two reinforcements (26).

16. A method for the installation of an expansion joint (E) in a concrete work (B) with a sealing device (J) which comprises a tubular and elastic cell (10) provided at upper and lower ends (12, 14) thereof respectively with a rigid upper end member (16) and a rigid lower end member (20), a lower surface of the lower end member (20) being shaped for facilitating the insertion of the sealing device (J) in the concrete work (B), not very extensible means (36) mounted between the upper and lower end members (16, 20), the cell (10) including reinforcement means (26) spaced one from the other, a continuous peripheral space being defined on the cell (10) between the lower ends of the reinforcement means (26) and the upper end of the lower end member (20), the method including the following steps:
a) the boring of a first hole (70) in the work intended for receiving the sealing device (J);
b) the installation of the sealing device (J) in the first hole (70), the reinforcement means (26) being positioned in the direction of the flow;
c) the filling under required pressure of the cell (10) with at least one appropriate fluid; and
d) the completion of the expansion joint (E) by cutting the work in the direction of the flow and opposite said reinforcement means (26), the cut communicating with the first hole (70) and thus with the sealing device (J) and extending to a depth substantially corresponding to the lower ends of the reinforcement means (26) so that the section of the cell (10) located between the reinforcement means (26) and the lower end member (20) contacts along its periphery the walls of the first hole (70).

17. The method of Claim 16, wherein before step b), a second and a third hole (62, 64) are bored with an overlap on each side of the first hole (70) for facilitating steps b) and d).

18. The method of Claim 17, wherein before step d), a fourth hole (74) is bored, this fourth hole being intended for receiving a second sealing device (J) similar to that of the first hole (70), and wherein, in step d), the cut which completes the expansion joint (E) also reaches the fourth hole (74).

19. The method of Claim 18, wherein a second sealing device (J) is installed in the fourth hole (74) and is then filled with an appropriate fluid.

20. The method of Claim 19, wherein the second sealing device (J) is filled under required pressure with at least one appropriate fluid.

21. The method of Claim 17, wherein the sealing device (J) comprises an installation device (44, 96, 98) including guide rings (44) disposed exteriorly along each of the reinforcement means (26), a pulley (96) being mounted vertically at the bottom of the lower end member (20), and a cable (98) engaging the pulley (96) and coming back up on each side of the cell (10) while passing through respective guide rings (44) of the reinforcement means (26), the method comprising, in step b), the introduction of the guide rings (44) in the second and third holes (62, 64).

22. The method of Claim 17, wherein the sealing device (J) comprises an installation device (44, 46, 54, 60) including guide rings (44) disposed exteriorly along each of the reinforcement means (26), at least one guide rod (60) passing through respective guide rings (44) of one of the reinforcement means (26) and including a threaded lower end, a guiding coupling sleeve (46) mounted at the bottom of the reinforcement means (26) and defining a threaded central opening receiving a respective guide rod (60), the method comprising, in step b), the introduction of the guide rod (60) and of the guide rings (44) associated therewith in one of the second and third holes (62, 64)), the attachment of the sealing device (J) to the work, then the unscrewing of the guide rod (60) from the guiding coupling sleeve (46), and finally the withdrawal of the guide rod (60) from its hole (62, 64).

23. The method of Claim 22, wherein a guide rod (60) is used for each of the second and third holes (62, 64), each guide rod (60) being associated with one of the reinforcement means (26).

24. A method for the readjustment of a sealing device (J) of an expansion joint (E) cut in a concrete dam (B), the sealing device (J) comprising a tubular and elastic cell (10) provided at upper and lower ends (12, 14) thereof respectively with a rigid upper end member (16) and a rigid lower end member (20), the bottom surface of the lower end member (20) being shaped for facilitating the insertion of the sealing device (J) in the dam, not very extensible means (36) mounted between the upper and lower end members (16, 20), the cell (10) including reinforcement means (26) spaced one from another, a continuous peripheral space being defined on the cell (10) between the lower ends of the reinforcement means (26) and the upper end of the lower end member (20), the sealing device (J) being installed in a first hole (70) defined in the concrete dam (B) on the expansion joint (E), the reinforcement means (26) being positioned in the direction of the flow of water, the cell (10) being pressurized with at least one appropriate fluid, a second sealing device (J), similar to the sealing device (J) of the first hole (70), being installed in a second hole (74) also defined on the expansion joint (E), the method including the following steps:
a) the pressurization of the second sealing device (J) under required pressure with at least one appropriate fluid;
b) the depressurization at least partial of the sealing device (J) of the first hole (70) in such a way as to eliminate the adherence thereof with the walls of the first hole (70) and for allowing this sealing device to recover its position in the first hole (70); and
c) the pressurization of the sealing device (J) of the first hole (70).

25. The method of Claim 24, wherein the installation and the pressurization of the second sealing device (J) comprise the boring of a second hole (74) on the expansion joint (E) intended for receiving the second sealing device (J) and the filling of the second sealing device (J) under required pressure with the appropriate fluid.

26. The readjustment method of Claim 24, wherein step d) consists in depressurizing the second sealing device (J).

27. A method for the replacement of a sealing device (J) of an expansion joint (E) cut in a concrete dam (B), the sealing device (J) comprising a tubular and elastic cell (10) provided at upper and lower ends (12, 14) thereof respectively with a rigid upper end member (16) and a rigid lower end member (20), the bottom surface of the lower end member (2) being shaped for facilitating the insertion of the sealing device (J) in the dam, not very extensible means (36) mounted between the upper and lower end members (16, 20), the cell (10) including reinforcement means (26) spaced one from another, a continuous peripheral space being defined on the cell (10) between the lower ends of the reinforcement means (26) and the upper end of the lower end member (20), the sealing device (J) being installed in a first hole (70) defined in the concrete dam (B) on the expansion joint (E), the reinforcement means (26) being positioned in the direction of the flow of water, the cell (10) being pressurized with at least one appropriate fluid, a second sealing device (J), similar to the sealing device (J) of the first hole (70), being installed in a second hole (74) also defined on the expansion joint (E), the method including the following steps:
a) the pressurization of the second sealing device (J) under required pressure with at least one appropriate fluid;
b) the depressurization of the sealing device (J) of the first hole (70);
c) the emptying of the fluid contained in the sealing device (J) of the first hole (70) and the withdrawal thereof from the first hole (70); and
d) the installation of a new sealing device (J) in the first hole (70), its subsequent filling with at least one appropriate fluid, and the pressurization of the new sealing device (J) of the first hole (70).

28. The method of Claim 27, wherein the installation and the pressurization of the second sealing device (J) comprise the boring of a second hole (74) on the expansion joint (E) intended for receiving the second sealing device (J) and the filling of the second sealing device (J) under required pressure with the appropriate fluid.

29. The replacement method of Claim 27, wherein step e) consists in depressurizing the second sealing device (J).
